# EUROPEAN PATENT SPECIFICATION

(11) **EP 4 103 129 B1**
(45) Date of publication and mention of the grant of the patent: **21.05.2025**
(21) Application number: 21812037.6
(22) Date of filing: 27.05.2021
(51) Int. Cl.: A61G 7/012, A61G 7/015, A61G 7/018, A61G 7/05, A61G 13/06, A61G 7/005

(54) **LIFT SYSTEMS AND LOAD CELLS FOR PATIENT SUPPORT APPARATUS**
HEBESYSTEME UND LASTZELLEN FÜR EINE PATIENTENLIEGEVORRICHTUNG
SYSTÈMES DE LEVAGE ET CELLULES DE CHARGE POUR APPAREIL DE SUPPORT DE PATIENT

(30) Priority: 27.05.2020 US 202063030478 P
(43) Date of publication of application: 21.12.2022
(60) Divisional application: 25167276.2
(73) Proprietor: Stryker Corporation, Portage, MI 49002-9711 (US)
(72) Inventor: BARTLEY, Gary, L., Kalamazoo, MI 49004 (US); CHILDS, William, D., Plainwell, MI 49080 (US); ST. JOHN, Connor, F., Kalamazoo, MI 49001 (US); PAUL, Anish, Kalamazoo, MI 49009 (US); TESSMER, Brian, J., Mattawan, MI 49071 (US)
(74) Representative: Röthinger, Rainer
(86) International application number: PCT/US2021/034393
(87) International publication number: WO 2021/242946

(56) References cited:
- US-A1- 2005 028 281
- US-A1- 2015 300 872
- US-A1- 2016 128 610
- US-A1- 2019 008 708
- US-A1- 2019 159 949
- US-B2- 8 069 514

## Description

### BACKGROUND

A patient support apparatus, such as a hospital bed, facilitates care of patients in a health care setting. A conventional patient support apparatus includes a base, a support frame upon which the patient is supported, a lift system for lifting and lowering the support frame relative to the base, and a plurality of load cells for measuring the patient's weight or for detecting the patient's position or movement. Sometimes, it is desirable for the lift system to be capable of placing the patient in one or more Trendelenburg positions. However, depending on the arrangement of the load cells, measurements taken in the one or more Trendelenburg positions may be less accurate than desired.

Document US 8 069 514 B2 may be construed to disclose an orthopaedic pillow for supporting a user is disclosed. The user has a head and a torso. The pillow comprises a head rest for supporting the head of the user and a wedge-shaped portion having a tapered surface. The wedge-shaped portion is attached to and extends away from the head rest. The tapered surface of the wedge-shaped portion supports portions of the torso of the user. The wedge-shaped portion has a shoulder recess depressed from the tapered surface to receive a shoulder of the user.

### SUMMARY

According to the present disclosure, there is provided a patient support system according to the independent claim. Further developments are set forth in the dependent claims.

According to the invention, there is a patient support apparatus including a support structure with a base, a support frame, and a patient support deck, the support frame extending longitudinally from a first longitudinal end to a second longitudinal end and the base having a guide. A first lift is provided to lift or lower the first longitudinal end of the support frame relative to the base. The first lift has a guided body movable longitudinally relative to the base along the guide. A second lift is provided to lift or lower the second longitudinal end of the support frame relative to the base. The first lift and the second lift being are operable to place the support frame in one or more Trendelenburg positions in which the first longitudinal end and the second longitudinal end are at different heights relative to the base. The patient support apparatus further includes a plurality of load cells, with at least one load cell coupled to the first lift to act between the first lift and the support frame, and with at least one load cell coupled to the second lift to act between the second lift and the support frame, such that a load on the support frame is transmitted to the plurality of load cells to measure the load. The guided body is arranged to move longitudinally relative to the base in response to operation of the second lift to move the support frame to the one or more Trendelenburg positions such that the first lift moves longitudinally toward the second lift to accommodate movement of the support frame to the one or more Trendelenburg positions.

In an example, a load cell including an elongate body extending longitudinally along a longitudinal axis from a mounting portion to a load application portion. The load application portion defines a pair of side openings and a pivot shaft passage extending between the side openings, with a load application region located midway through the pivot shaft passage. Each of the pair of side openings has a first diameter, and the pivot shaft passage has a second diameter at the load application region, the second diameter being smaller than the first diameter.

### BRIEF DESCRIPTION OF THE DRAWINGS

Figure 1 is perspective view of a patient support apparatus.
Figure 2 is an elevational and schematic view of the patient support apparatus of Figure 1 with a support frame at a first height relative to a base.
Figure 3 is an elevational and schematic view of the patient support apparatus of Figure 1 with the support frame lowered to a second height relative to the base.
Figure 4A is an elevational and schematic view of the patient support apparatus of Figure 1 with the support frame in a Trendelenburg position.
Figure 4B is an elevational and schematic view of the patient support apparatus of Figure 1 with the support frame in another Trendelenburg position.
Figure 5 is a top and schematic view of the patient support apparatus of Figure 1 illustrating portions of the support frame, a lift system, the load cells, and the base.
Figure 5A is a close-up view of a lift of the patient support apparatus of Figure 1.
Figure 5B is a close-up view of a lift of the patient support apparatus of Figure 1 with an alternative actuator.
Figure 5C is an elevational and schematic view of the patient support apparatus of Figure 1 with the alternative actuator of Figure 5B.
Figure 6 is an elevational and schematic view of another patient support apparatus with a support frame at a first height relative to a base.
Figure 7A is an elevational and schematic view of the patient support apparatus of Figure 6 with the support frame in a Trendelenburg position.
Figure 7B is an elevational and schematic view of the patient support apparatus of Figure 6 with the support frame in another Trendelenburg position.
Figure 8 is a top and schematic view of the patient support apparatus of Figure 6 illustrating portions of the support frame, a lift system, load cells, and the base.
Figure 9 is an elevational and schematic view of the patient support apparatus of Figure 6 with the support frame at the first height relative to the base and with the load cells in an alternative arrangement.
Figure 10 is an elevational and schematic view of the patient support apparatus of Figure 9 with the support frame in a Trendelenburg position.
Figure 11 is a top and schematic view of the patient support apparatus of Figure 9 illustrating portions of the support frame, the lift system, the load cells, and the base.
Figure 12 is an elevational and schematic view of the patient support apparatus of Figure 6 with the support frame at the first height relative to the base and with the load cells in an alternative arrangement.
Figure 13 is an elevational and schematic view of the patient support apparatus of Figure 12 with the support frame in a Trendelenburg position.
Figure 14 is an elevational and schematic view of another patient support apparatus with a support frame at a first height relative to a base.
Figure 15 is an elevational and schematic view of the patient support apparatus of Figure 14 with the support frame in a Trendelenburg position.
Figure 16 is a schematic view of a control system.
Figure 17 is a perspective view of an arrangement of load cells of the patient support apparatus of Figure 1.
Figure 18 is a top perspective view of a load cell.
Figure 19 is a bottom perspective view of the load cell of Figure 18.
Figure 20 is a top view of the load cell of Figure 18.
Figure 21 is a side view of the load cell of Figure 18.
Figure 22 is a bottom view of the load cell of Figure 18.
Figure 23 is a cross-sectional view of the load cell of Figure 18 taken generally along the line 23-23 in Figure 18.
Figure 24 is a partially exploded view of a bushing and a block of the load cell of Figure 18.
Figure 24A is a partially exploded view of another bushing and another block of a load cell.
Figures 25A through 25C illustrate various positions of a pivot shaft in the bushing of the load cell.
Figure 26 is a cross-sectional view of two load cells of Figure 18 taken generally along the line 26-26 in Figure 25C. Note that the cross-section for one of the load cells is reversed from the direction shown in line 26-26.
Figure 27 is a cross-sectional view of another load cell.

### DETAILED DESCRIPTION

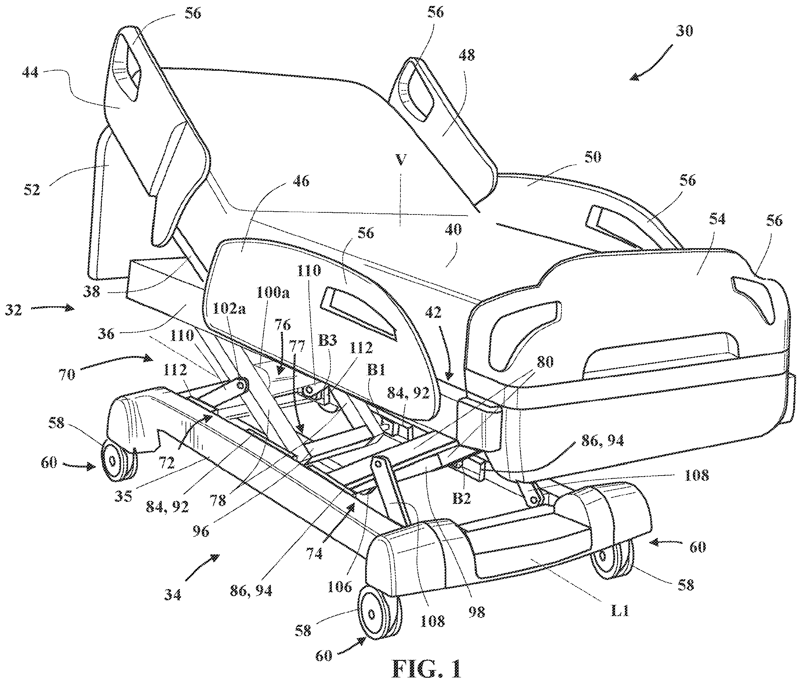

Referring to Figure 1, a patient support apparatus 30 is shown for supporting a patient in a health care setting. The patient support apparatus 30 illustrated in Figure 1 is a hospital bed. In other versions, however, the patient support apparatus 30 may be a stretcher, cot, table, wheelchair, or similar apparatus utilized in the care of a patient.

A support structure 32 provides support for the patient. The support structure 32 illustrated in Figure 1 includes a base 34 and a support frame 36. The base 34 includes a base frame 35. The support frame 36 is spaced above the base frame 35 in Figure 1. The support structure 32 also includes a patient support deck 38 disposed on the support frame 36. The patient support deck 38 includes several sections, some of which are capable of articulating (e.g., pivoting) relative to the support frame 36, such as a fowler section, a seat section, a thigh section, and a foot section. The patient support deck 38 provides a patient support surface 42 upon which the patient is supported.

A mattress 40 is disposed on the patient support deck 38 during use. The mattress 40 includes a secondary patient support surface upon which the patient is supported. The base 34, support frame 36, patient support deck 38, and patient support surface 42 each have a head end and a foot end corresponding to designated placement of the patient's head and feet on the patient support apparatus 30. The head end and the foot end may also be referred to as opposing longitudinal ends. The base 34 includes a longitudinal axis L1 along its length from the head end to the foot end. The base 34 also includes a vertical axis V arranged crosswise (e.g., perpendicularly) to the longitudinal axis L1 along which the support frame 36 is lifted and lowered relative to the base 34. In addition, the mattress 40 may be omitted in certain versions, such that the patient rests directly on the patient support surface 42.

Side rails 44, 46, 48, 50 are coupled to the support structure 32. A first side rail 44 is positioned at a right head end of the patient support deck 38. A second side rail 46 is positioned at a right foot end of the support frame 36. A third side rail 48 is positioned at a left head end of the patient support deck 38. A fourth side rail 50 is positioned at a left foot end of the support frame 36. If the patient support apparatus 30 is a stretcher or a cot, there may be fewer side rails. The side rails 44, 46, 48, 50 are movable between a raised position in which they block ingress and egress into and out of the patient support apparatus 30, one or more intermediate positions, and a lowered position in which they are not an obstacle to such ingress and egress. In some configurations, the patient support apparatus 30 may not include any side rails.

A headboard 52 and a footboard 54 are coupled to the support frame 36. In some versions, when the headboard 52 and footboard 54 are included, the headboard 52 and footboard 54 may be coupled to other locations on the patient support apparatus 30, such as the base 34. In some versions, the patient support apparatus 30 does not include the headboard 52 and/or the footboard 54.

Caregiver interfaces 56, such as handles, are shown integrated into the footboard 54 and side rails 44, 46, 48, 50 to facilitate movement of the patient support apparatus 30 over floor surfaces. Additional caregiver interfaces 56 may be integrated into the headboard 52 and/or other components of the patient support apparatus 30. The caregiver interfaces 56 are graspable by the caregiver to manipulate the patient support apparatus 30 for movement.

Wheels 58 are coupled to the base 34 to facilitate transport over the floor surfaces. The wheels 58 are arranged in each of four quadrants of the base 34 adjacent to corners of the base 34. In the version shown, the wheels 58 are caster wheels able to rotate and swivel relative to the support structure 32 during transport. Each of the wheels 58 forms part of a caster assembly 60. Each caster assembly 60 is mounted to the base 34. It should be understood that various configurations of the caster assemblies 60 are contemplated. In addition, in some versions, the wheels 58 are not caster wheels and may be non-steerable, steerable, non-powered, powered, or combinations thereof. Additional wheels are also contemplated. For example, the patient support apparatus 30 may include four non-powered, non-steerable wheels, along with one or more powered wheels. In some cases, the patient support apparatus 30 may not include any wheels. In some versions, one or more auxiliary wheels (powered or non-powered), which are movable between stowed positions and deployed positions, may be coupled to the support structure 32.

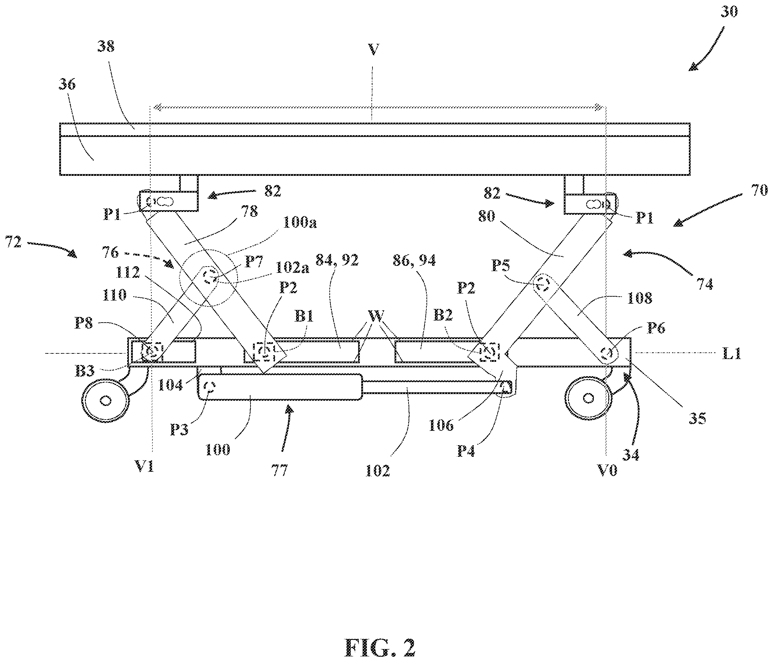

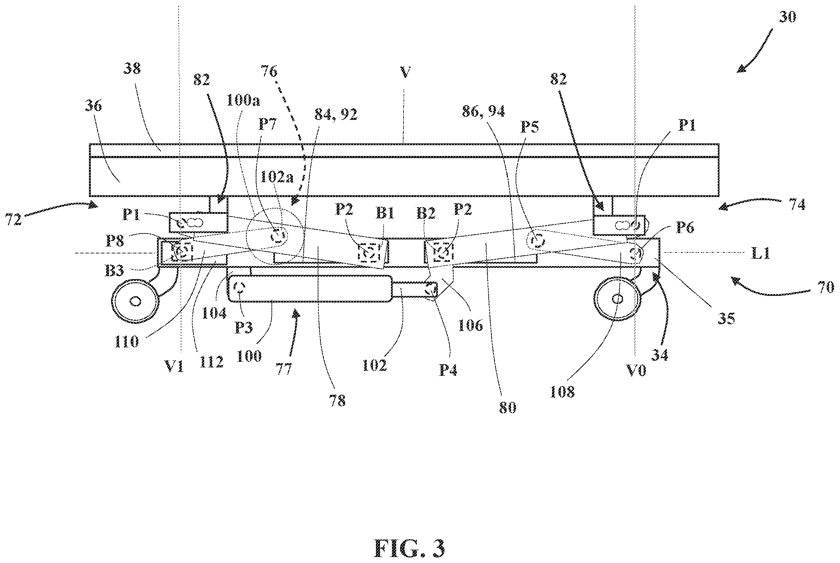

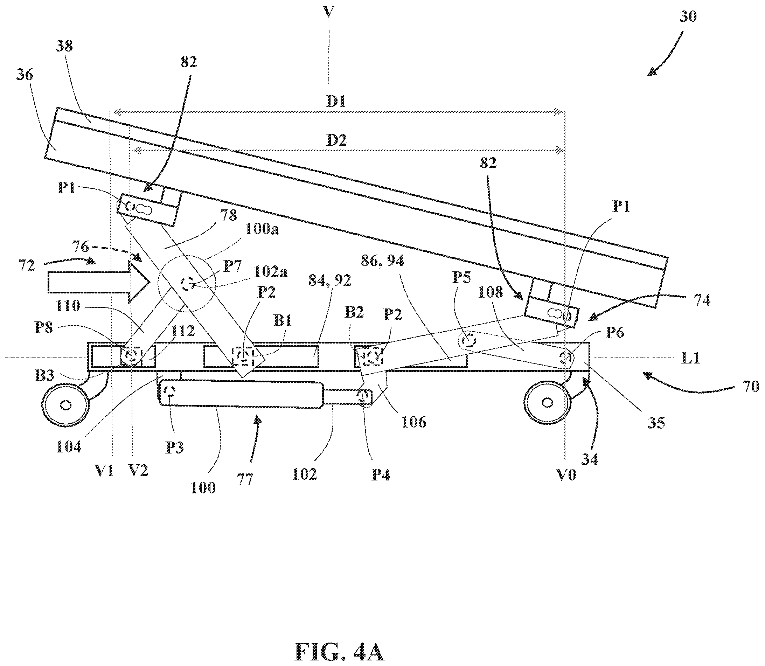

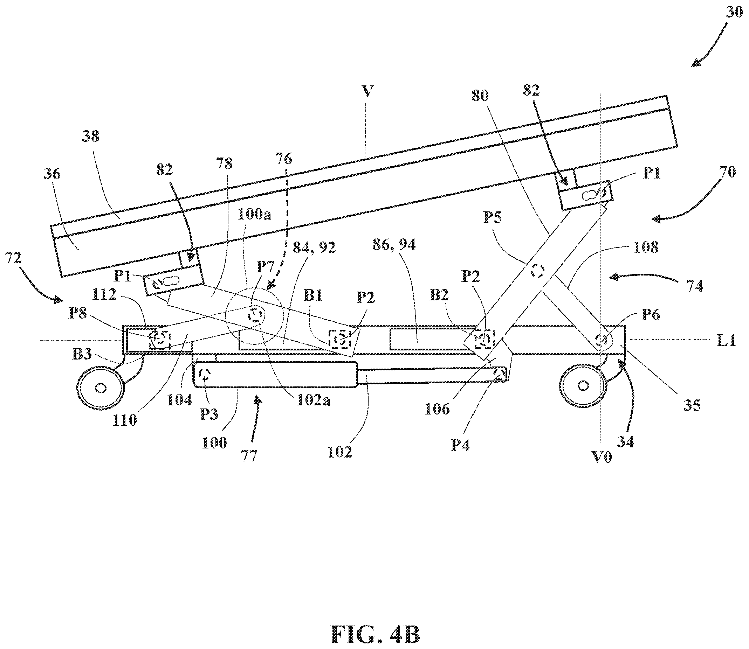

The patient support apparatus 30 includes a lift system 70 that operates to lift and lower the support frame 36 and the patient support deck 38 relative to the base 34. The lift system 70 is configured to move the support frame 36 from a first height (shown in Figure 2) to a second, lower height (shown in Figure 3), or to any desired position in between. The lift system 70 includes a head end lift 72 and a foot end lift 74. The head end lift 72 is arranged to lift or lower the head end of the support frame 36 relative to the base 34. The foot end lift 74 is arranged to lift or lower the foot end of the support frame 36 relative to the base 34. Each of the head end lift 72 and the foot end lift 74 includes an actuator 76, 77 to actuate the lifts 72, 74. The lifts 72, 74 are separately and independently operable such that the support frame 36 and the patient support deck 38 can be placed in one or more Trendelenburg positions in which the head end and the foot end are at different heights relative to the base 34, as shown in Figures 4A and 4B.

The lifts 72, 74 may be identical in form or may have different forms. For instance, one of the lifts may be a crank-type mechanism or scissor-type mechanism, while the other of the lifts may be a column lift. The head end lift 72 and the foot end lift 74 may be interchangeable such that the head end lift 72 is at the foot end of the patient support apparatus 30 and the foot end lift 74 is at the head end of the patient support apparatus 30. Figures 2 through 4B are elevational and schematic views that illustrate the lifts 72, 74 and their operation. The mattress 40, side rails 44, 46, 48, 50, headboard 52, and footboard 54 have been removed in Figures 2 through 4B for illustration purposes.

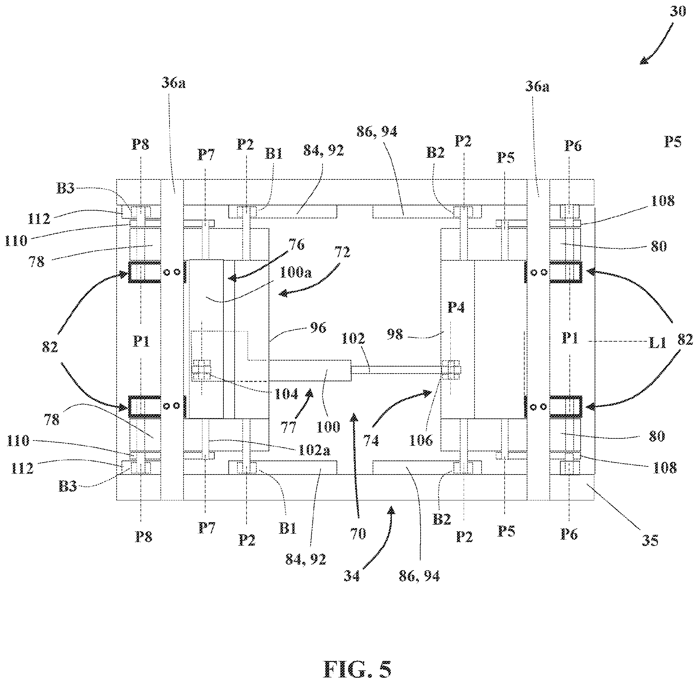

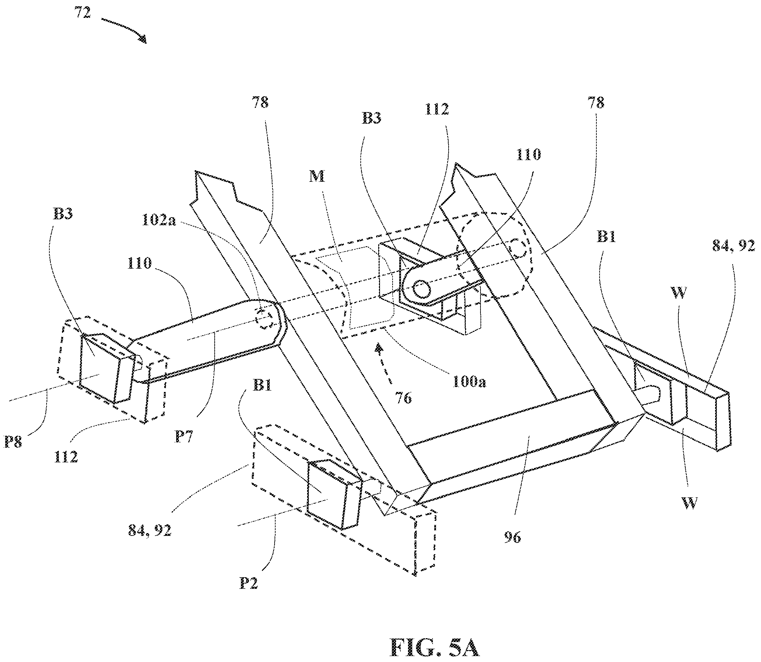

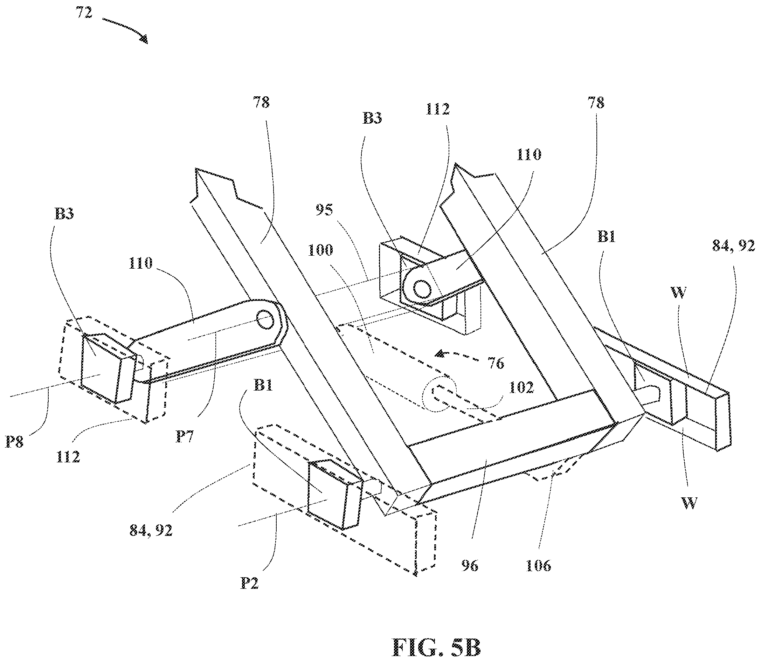

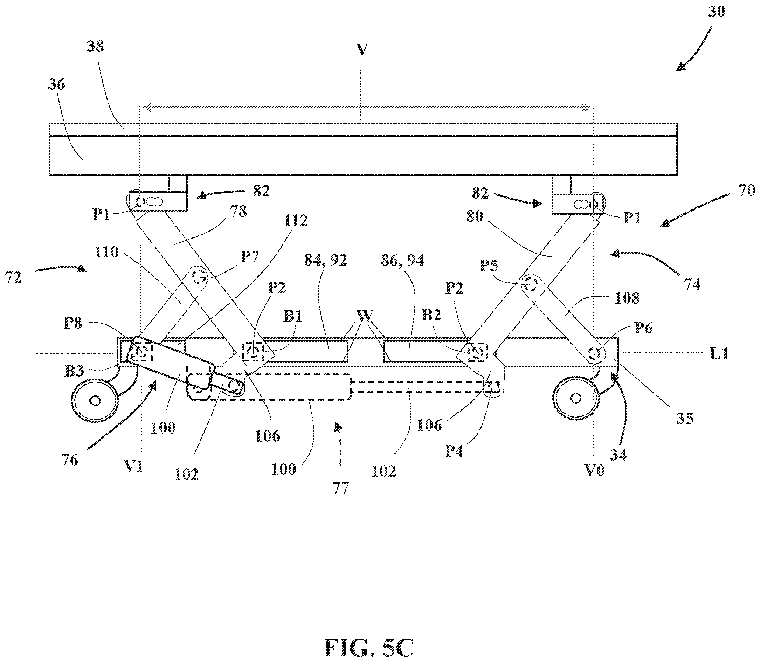

The head end lift 72 includes one or more head end legs 78 and the foot end lift 74 includes one or more foot end legs 80. In the version shown, there are two, laterally spaced, head end legs 78 and two, laterally spaced, foot end legs 80. Since Figures 2 through 4B are elevational and schematic views, only one head end leg 78 and one foot end leg 80 are shown for ease of illustration. The other head end leg 78 and foot end leg 80 and their connections are the same as those shown, but on the opposite side of the base frame 35 (i.e., only one, interior side of the base frame 35 is shown in Figures 2 through 4B). The head end legs 78 and the foot end legs 80 are similarly arranged, yet in opposing directions. All of the legs 78, 80 can be seen in Figures 1 and 5.

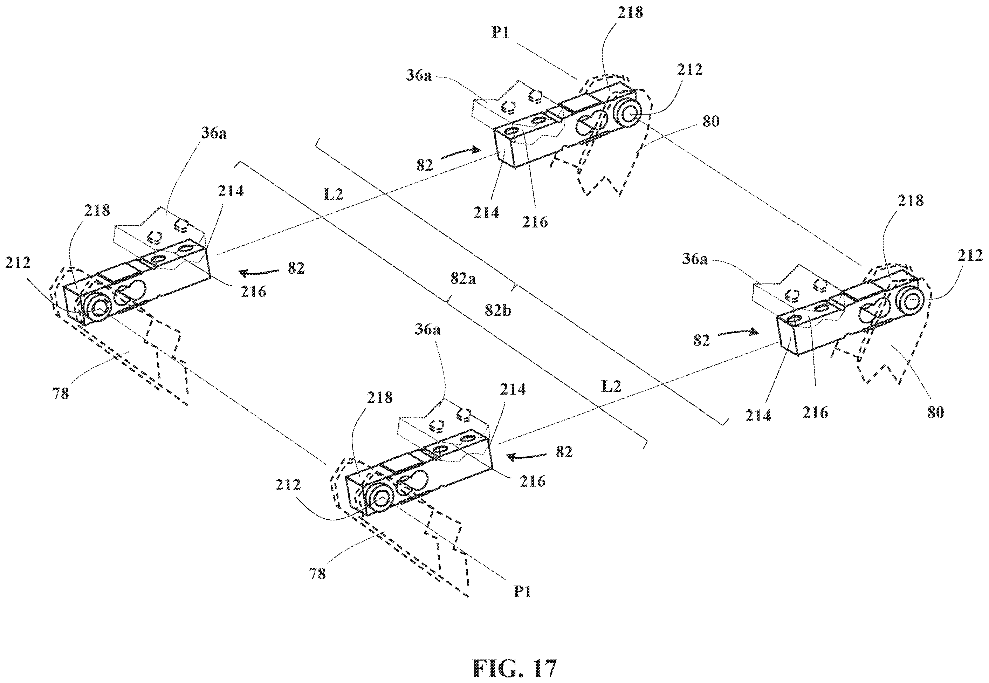

Referring specifically to Figures 2 through 4B, each of the legs 78, 80 extends at an acute angle (relative to the longitudinal axis L1) from a first end pivotally coupled to a load cell 82 to a second end pivotally and slidably coupled to the base 34. More specifically, the first ends are pivotally connected to the load cells 82 at upper pivot axes P1 and the second ends are pivotally connected to the base frame 35 at lower pivot axes P2. The load cells 82 have mounting portions fixed to the support frame 36, as will be described further below (see, e.g., Figure 17).

The load cells 82 coupled to the head end legs 78 (could be only one is some versions) act between the head end lift 72 and the support frame 36. The load cells 82 coupled to the foot end legs 80 (could be only one in some versions) act between the foot end lift 74 and the support frame 36. Pivot connections between the legs 78, 80 and the load cells 82 and/or between the legs 78, 80 and the base frame 35 may be formed using any suitable brackets, pivot pins, pivot shafts, or any other suitable pivot connections. The legs 78, 80 are operably coupled to their respective actuators 76, 77 to be moved by their respective actuators 76, 77 to pivot relative to the load cells 82 about the upper pivot axes P1 and to pivot relative to the base 34 about the lower pivot axes P2. In some versions, the lifts 72, 74 may each include a single leg. In some versions, other types of lifting members capable of lifting and lowering the support frame 36 may be employed.

Each of the lifts 72, 74 includes guided bodies B1, B2 that are pivotally connected to the second ends of the legs 78, 80 via the pivot connections about the lower pivot axes P2. One guided body B1, B2 is provided for each leg 78, 80 (only two guided bodies B1, B2 can be seen in Figures 2 through 4B). In the version shown, the guided bodies B1, B2 include blocks formed of low friction materials, such as polytetrafluoroethylene (PTFE), to limit friction as the blocks translate relative to the base 34. The blocks can be any shape, including box-shaped, spherical, cylindrical, or the like. In some versions, the guided bodies include rollers, pins, shafts, gears, or other movable elements that move longitudinally.

The base 34 includes a pair of head end guides 84 and a pair of foot end guides 86 fixed to the base frame 35 to receive the guided bodies B1, B2 (again, only two guides can be seen in Figures 2 through 4B). The guided bodies B1, B2 are configured to translate longitudinally in the guides 84, 86 during operation of the lifts 72, 74. Owing to the pivot connections of the guided bodies B1, B2 to the legs 78, 80, the guides 84, 86 thereby act to guide translational movement of the second ends of the legs 78, 80 during operation (compare Figures 2 and 3). The head end guides 84 guide movement of the guided bodies B1 pivotally connected to the head end legs 78. The foot end guides 86 guide movement of the guided bodies B2 pivotally connected to the foot end legs 80.

The head end guides 84 include head end guide tracks 92 and the foot end guides 86 include foot end guide tracks 94. The guide tracks 92, 94 are shaped to receive the guided bodies B1, B2. The guide tracks 92, 94 are fixed to the base frame 35 and have an elongated shape. In particular, the guide tracks 92, 94 are shown as rectangular boxes having openings facing inwardly from the base frame 35. The guide tracks 92, 94 have upper and lower walls W to vertically constrain the guided bodies B1, B2 to limit their motion to sliding within the guide tracks 92, 94. In some versions, the guide tracks 92, 94 may have flanges extending from the upper and lower walls W to capture the guided bodies B1, B2 in the guide tracks 92, 94 and prevent lateral withdrawal from the guide tracks 92, 94. In the version shown, the guide tracks 92, 94 are arranged horizontally, but other arrangements are also contemplated. The guide tracks 92, 94 may be arcuate in shape, linear, combinations thereof, and the like. The guide tracks 92, 94 may be shaped and/or arranged to facilitate both longitudinal and vertical movement of the guided bodies B1, B2. The guide tracks 92, 94 are slide-bearing guide tracks in which the blocks slide and may similarly be formed or coated with low friction materials, such as metal coated with PTFE and/or other low friction material.

Referring specifically to Figure 2, the legs 78, 80 pivot relative to their respective guided bodies B1, B2 when the guided bodies B1, B2 move longitudinally in the guide tracks 92, 94. Thus, the legs 78, 80 are pivotally and slidably coupled to the base frame 35. The guide tracks 92, 94 and the legs 78, 80 are arranged so that the guided bodies B1 move toward the guided bodies B2 as the support frame 36 is lowered relative to the base 34 and move away from each other as the support frame 36 is lifted relative to the base 34 (compare Figures 2 and 3). In some versions, the guide tracks 92, 94 and the legs 78, 80 may be arranged such that the motion of the guided bodies B1, B2 during lifting and lowering is reversed. The guide tracks 92 and the guided bodies B1 associated with the head end legs 78 are best shown in Figure 5A - the guide tracks 94 and the guided bodies B2 associated with the foot end legs 80 may be similar in shape, size, and arrangement with respect to the foot end legs 80.

The actuators 76, 77 may be placed at any suitable location to actuate the lifts 72, 74. In the version shown in Figures 1 through 5A, the actuator 76 is a rotary actuator that has a housing 100a fixed to the head end legs 78 and a rotating shaft 102a fixed to at least one of a pair of links 110, described further below. The rotating shaft 102a may be fixed to both of the links 110 through the housing 100a. The housing 100a contains a motor M (see Figure 5A) and gear train operable to rotate the rotating shaft 102a about pivot axis P7. The rotating shaft 102a rotates relative to the housing 100a to rotate the links 110 relative to the head end legs 78. Alternatively, the housing 100a could be fixed to the links 110 and the rotating shaft 102a fixed to the head end legs 78. Other suitable locations for the rotary actuator are possible.

The actuator 76 could also be located as shown in Figures 5B and 5C, to operate between the head end legs 78 and the links 110. In this version, a first end of the actuator 76 is pivotally connected to the links 110, e.g., directly to one of the links 110 or to a bracket of a cross member 95 (see Figure 5B) fixed to and extending between the links 110. A second end of the actuator 76 is pivotally connected to the head end legs 78, e.g., directly to one of the head end legs 78 or to a bracket 106 of a head end support member 96 (see Figure 5B) fixed to and extending between the head end legs 78. In this version, the actuator 76 is a linear actuator that includes a housing 100 and a drive rod 102 that extends and retracts relative to the housing 100 to rotate the links 110 relative to the head end legs 78. The housing 100 and drive rod 102 may be pivotally connected to the links 110 and the legs 78 via brackets and pivot pins, pivot shafts, or any other suitable pivot connections.

In the various versions shown, the actuator 76 is arranged without any connections to the base 34 or to the support frame 36. In the versions shown, the first lift 72 is a free-standing lift. During movement to a Trendelenburg position, as described further below, the first lift 72 slides longitudinally relative to the second lift 74. As a result, the actuator 76 also slides longitudinally, including both the housing 100a, 100 and the rotating shaft/drive rod 102a, 102 sliding toward the second lift 74.

Referring back to Figure 2, the actuator 77 has a first end pivotally connected to the base frame 35. More specifically, the actuator 77 includes a housing 100 and a drive rod 102 that extends and retracts relative to the housing 100, and the housing 100 is pivotally connected at the first end to the base frame 35 via a base bracket 104. The base bracket 104 is fixed to the base frame 35 (e.g., via fasteners, welding, or the like). The first end of the actuator 77 pivots about pivot axis P3 fixed relative to the base frame 35. The pivot axis P3 is defined by the base bracket 104 via a pivot pin, pivot shaft, or any other suitable pivot connection. The actuator 77 extends from the first end to a second end that is pivotally connected to the foot end legs 80 via a support bracket 106. The support bracket 106 is fixed to a foot end support member 98 (see Figure 1). The support bracket 106 is fixed to the foot end support member 98 via fasteners, welding, or the like. The second end of the actuator 77 pivots about pivot axis P4 defined by the support bracket 106 via a pivot pin, pivot shaft, or any other suitable pivot connection. In the version shown, the head end support member 96 interconnects the second ends of the pair of head end legs 78 and the foot end support member 98 interconnects the second ends of the pair of foot end legs 80 (see Figures 1 and 5). Thus, the support members 96, 98 act as cross supports rigidly fixed to the respective legs 78, 80 to move with the legs 78, 80. The support members 96, 98, may be fixed to their respective legs 78, 80 in any suitable manner, such as by fasteners, welding, or the like. Thus, any forces applied to the support bracket 106 via the actuator 77 is transmitted to the foot end legs 80 by virtue of the rigid connection of the support bracket 106 to the foot end legs 80.

The actuator 77 may also be a rotary actuator, arranged relative to the foot end legs 80 and links 108 in the same manner that the actuator 76 shown in Figure 5A is arranged relative to the head end legs 78 and links 110. The actuator 77 may also be arranged like the actuator 76 shown in Figures 5B and 5C, instead acting between the foot end legs 80 and the links 108. Numerous actuator types and arrangements are possible to operate the lifts 72, 74 to lift and lower the support frame 36 relative to the base 34.

The actuators 76, 77 are operably coupled to the respective legs 78, 80 to longitudinally move the second ends of the respective legs 78, 80 via the guided bodies B1, B2 and guide tracks 92, 94 and cause the respective legs 78, 80 (by virtue of their pivot connections) to pivot about the upper and lower pivot axes P1, P2 to lift and lower the support frame 36 relative to the base 34. The actuators 76, 77 include linear actuators, rotary actuators, or other types of actuators. The actuators 76, 77 may be electrically operated, hydraulic, electro-hydraulic, pneumatic, or the like. The actuators 76, 77 may include motors, gear trains, drive screws, nuts/lead screws, and the like, for actuation. In the version shown, the actuators 76, 77 are electric, motor-driven actuators.

Still referring to Figure 2, one or more first links 108 are pivotally connected at a first end to the foot end legs 80 and extend from the first end to a second end pivotally connected to the base 34. In the version shown, two first links 108 are pivotally connected to the foot end legs 80 to pivot about a pivot axis P5 that moves with the foot end legs 80 (only one first link 108 is shown in Figures 2 through 4B). Each of the first links 108 are pivotally connected to the base frame 35 to pivot about a pivot axis P6 that is fixed relative to the base frame 35. The pivot connections for the first links 108 may be formed via pivot pins, pivot shafts, or any other suitable pivot connections. The pivot axis P5 is located in-line with and halfway between the upper pivot axis P1 and the lower pivot axis P2 for the foot end legs 80.

The first links 108, in some versions, control and somewhat constrain movement of the support frame 36 during lifting and lowering, owing to their pivot connections with the foot end legs 80 and the base frame 35, and owing to the upper pivot axes P1 being fixed to the support frame 36 (some slight, relative movements may be allowed by the load cells 82). Compare Figures 2 and 3 and note that the upper pivot axes P1 remain vertically aligned with the lower pivot axes P2 during raising and lowering. Moreover, when the lifts 72, 74 are operated independently to place the support frame 36 in a Trendelenburg position, as shown in Figures 4A and 4B, the first links 108 act to prevent the upper pivot axis P1 at the foot end from shifting longitudinally relative to the base 34. Conversely, the upper pivot axis P1 at the head end shifts longitudinally.

One or more second links 110 are pivotally connected at a first end to the head end legs 78 and extend from the first end to a second end pivotally connected to the base 34. In the version shown, two second links 110 are pivotally connected to the head end legs 78 to pivot about the pivot axis P7 that moves with the head end legs 78 (only one second link 110 is shown in Figures 2 through 4B). The second links 110 are also pivotally connected to the base frame 35 to pivot about a pivot axis P8. Unlike the first links 108 and the pivot axis P6, the pivot axis P8 is not fixed relative to the base frame 35 but can move longitudinally relative to the base frame 35. Guided bodies B3 are pivotally connected at the second ends of the second links 110 about pivot axis P8 to slide in guides 112. The guided bodies B3 and the guides 112 may be similar to those previously described to allow the second ends of the second links 110 to slide relative to the base 34 (see also Figure 5A). The pivot connections for the second links 110 may be formed via pivot pins, pivot shafts, or any other suitable pivot connections. The pivot axis P7 is located in-line with and halfway between the upper pivot axis P1 and the lower pivot axis P2 for the head end legs 78. The actuator 76 for the head end lift 72 is operably coupled to the second links 110, as previously described.

As previously mentioned, when the lifts 72, 74 are operated independently to place the support frame 36 in a Trendelenburg position, the first links 108 act on the foot end lift 74 to prevent the upper pivot axis P1 at the foot end from shifting longitudinally relative to the base 34, but the upper pivot axis P1 at the head end does shift longitudinally. The second links 110 also shift longitudinally, as shown in Figures 4A and 4B. More specifically, when either or both of the actuators 76, 77 are operated to place the support frame 36 and the patient support deck 38 in the one or more Trendelenburg positions, the pivot axis P8 moves longitudinally to remain aligned with the upper pivot axis P1 at the head end (see the vertical line V2 shown in Figure 4A compared to the vertical line V1 of Figure 2 made by the pivot axes P1, P8 prior to moving to the Trendelenburg position). The guided bodies B3 thus move longitudinally in the guides 112 relative to the base 34 toward the foot end.

When moving to the Trendelenburg position, as shown in Figure 4A, the horizontal, longitudinal distance between the upper pivot axes P1 and between the pivot axes P6, P8 gets smaller (see horizontal distance D2 compared to horizontal distance D1). The head end lift 72 slides toward the foot end lift 74 to accommodate movement of the support frame 36 to the one or more Trendelenburg positions. This occurs when placing the support frame 36 and the patient support deck 38 in either of the Trendelenburg positions shown in Figures 4A and 4B. Thus, operation of either or both lifts 72, 74 to place the support frame 36 and the patient support deck 38 in a Trendelenburg position causes the upper pivot axis P1 associated with the head end lift 72 to move longitudinally closer to the foot end. Likewise, the pivot axis P8 and associated guided bodies B3 also move longitudinally closer to the foot end. The lower pivot axis P2 and corresponding guided bodies B1 associated with the head end lift 72 also move longitudinally closer to the foot end. For example, comparing Figure 2 to Figure 4A, the head end lift 72 remains in the same configuration and fully slides toward the foot end lift 74 when the foot end lift 74 is actuated to place the support frame 36 and the patient support deck 38 in the Trendelenburg position of Figure 4A. In other words, the head end legs 78, the second links 110, the guided bodies B1, the guided bodies B3, and the actuator 76 are all longitudinally displaced by a distance equal to D1-D2.

Another lift system that can be used on the patient support apparatus 30 is shown in U.S. Provisional Patent Application No. 62/948,540, filed on December 16, 2019, entitled "Patient Support With Lift Assembly".

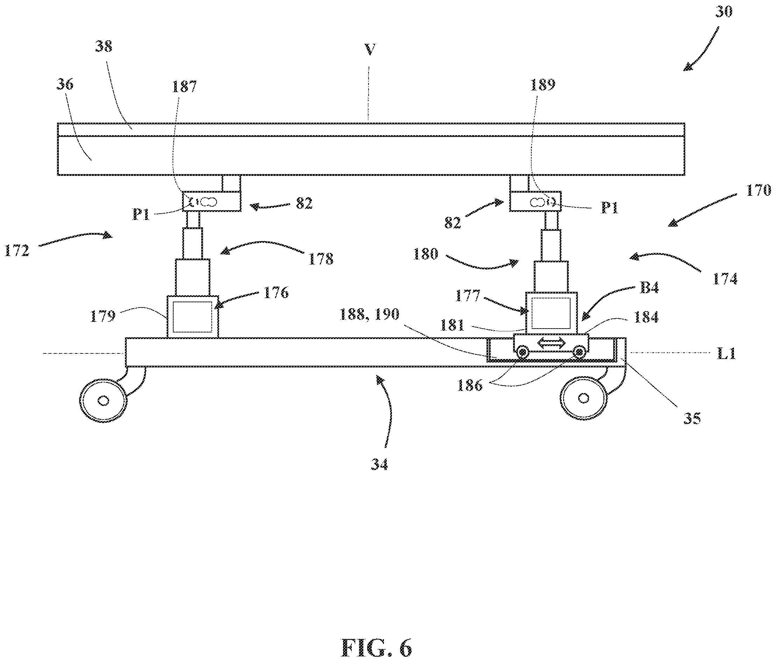

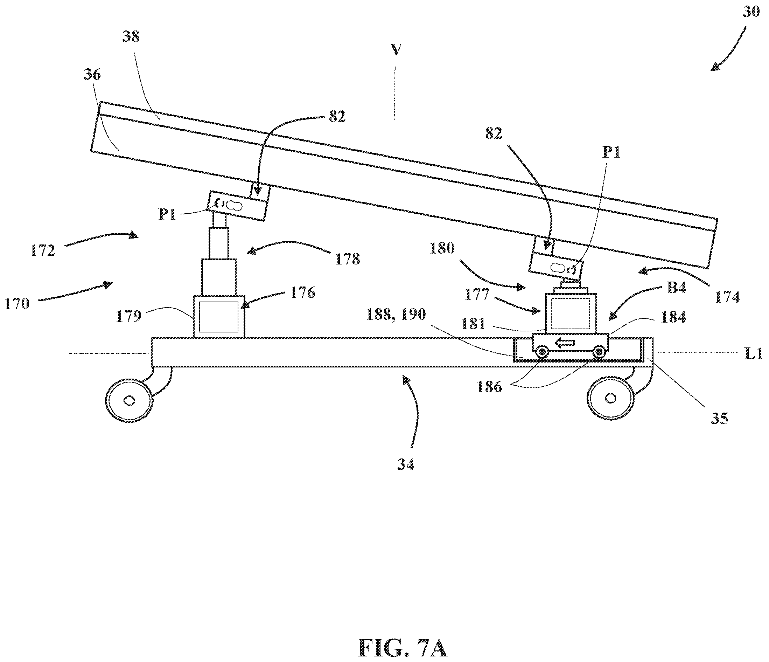

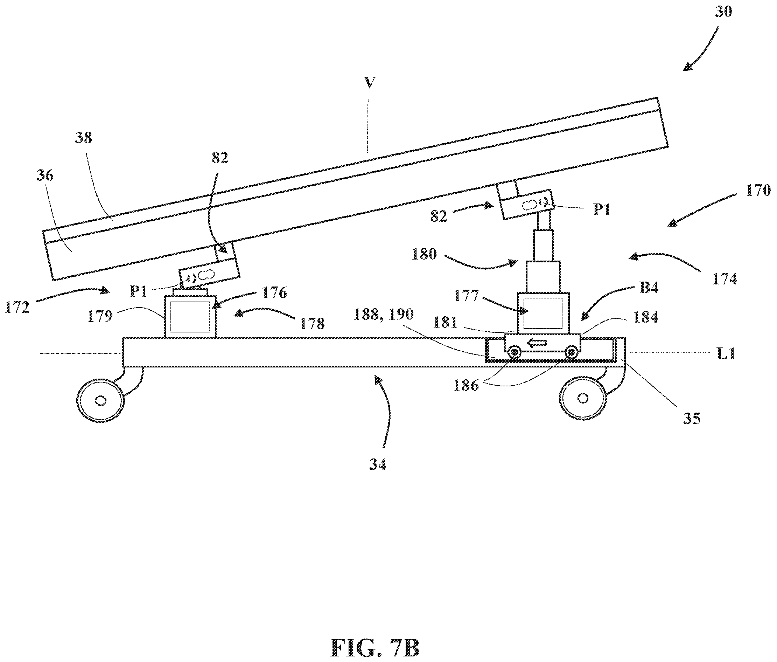

Figures 6 through 8 show another lift system 170 that operates to lift and lower the support frame 36 and the patient support deck 38 relative to the base 34 in much the same way as the lift system 70. The lift system 170 is configured to move the support frame 36 between various heights relative to the base 34. The lift system 170 includes a head end lift 172 and a foot end lift 174. The head end lift 172 is arranged to lift or lower the head end of the support frame 36 relative to the base 34. The foot end lift 174 is arranged to lift or lower the foot end of the support frame 36 relative to the base 34. Each of the head end lift 172 and the foot end lift 174 includes an actuator 176, 177 to actuate the lifts 172, 174. The lifts 172, 174 are separately and independently operable such that the support frame 36 and the patient support deck 38 can be placed in one or more Trendelenburg positions in which the head end and the foot end are at different heights relative to the base 34, as shown in Figures 7A and 7B.

The head end lift 172 and the foot end lift 174 may be interchangeable such that the head end lift 172 is at the foot end of the patient support apparatus 30 and the foot end lift 174 is at the head end of the patient support apparatus 30. Figures 6 through 7B are elevational and schematic views that illustrate the lifts 172, 174 and their operation. The mattress 40, side rails 44, 46, 48, 50, headboard 52, and footboard 54 have been removed in Figures 6 through 7B for illustration purposes.

In this version, the head end lift 172 includes a head end column lift 178 extending between a first pair of load cells 82 and the base 34 (only one of the pair of load cells 82 is shown in Figures 6 through 7B). The actuator 176 is arranged to extend and retract the head end column lift 178. The head end column lift 178 is fixed from sliding relative to the base 34 and has a base portion 179 fixed to the base frame 35. The foot end lift 174 includes a foot end column lift 180 extending between a second pair of load cells 82 and the base 34 (only one of the pair of load cells 82 is shown in Figures 6 through 7B). The actuator 177 extends and retracts the foot end column lift 180. The foot end lift 174 is allowed to slide relative to the base 34 and relative to the head end lift 172, as described further below, to accommodate movement of the support frame 36 to the one or more Trendelenburg positions.

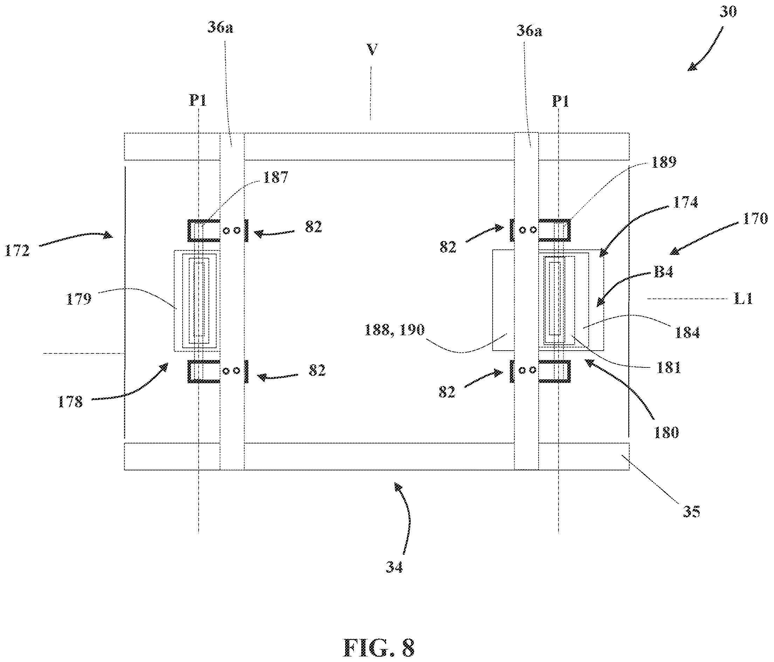

The column lifts 178, 180 extend and retract vertically in a telescoping manner. An end of the head end column lift 178 is pivotally connected to the first pair of load cells 82 at an upper pivot axis P1. An end of the foot end column lift 180 is pivotally connected to the second pair of load cells 82 at an upper pivot axis P1. Pivot connections between the column lifts 178, 180 and the load cells 82 may be formed using any suitable brackets, pivot pins, pivot shafts, or any other suitable pivot connections. See, for example, the pivot shafts 187, 189 connecting the column lifts 178, 180 to the load cells 82 in Figure 8. In some versions, the column lifts 178, 180 may be in the form of linear actuators such as the actuator 77 previously described, arranged and mounted to operate vertically. The column lifts 178, 180 may be hydraulic jacks capable of extending and retracting. The column lifts 178, 180 may be like those described in U.S. Patent No. 6,820,294, entitled "Linkage For Lift/Lowering Control For A Patient Supporting Platform," filed on February 26, 2002, or like those described in U.S. Patent No. 7,395,564, entitled "Articulated Support Surface For A Stretcher Or Gurney," filed on March 24, 2006.

The foot end column lift 180 includes a guided body B4 that supports the foot end column lift 180 during movement to the one or more Trendelenburg positions, as shown in Figures 7A and 7B. In the version shown, the guided body B4 includes a cart 184 with wheels 186. The cart 184 is fixed to a base portion 181 of the foot end column lift 180. The base 34 provides a guide 188 to receive the cart 184. The guide 188 includes a guide track 190 that constrains movement of the cart 184 to within the guide track 190. The guide track 190 may be defined by a bottom wall upon which the cart 184 and wheels 186 are supported and one or more side walls to constrain movement of the cart 184 so that motion is limited to being in the longitudinal direction during movement to the one or more Trendelenburg positions.

Owing to the pivot connections of the column lifts 178, 180 at the upper pivot axes P1, which are relatively fixed to the support frame 36, and owing to the head end column lift 178 having its base portion 179 fixed to the base frame 35, the guided body B4 is configured to translate longitudinally in the guide 188 during operation of either or both of the lifts 172, 174 to place the support frame 36 and the patient support deck 38 in a Trendelenburg position (compare Figures 6 and 7A or 7B). As illustrated by arrows in Figures 7A and 7B, when the support frame 36 and the patient support deck 38 are moved to a Trendelenburg position, the guided body B4, and by extension the foot end lift 174, slide toward the head end lift 172. If the lifts 172, 174 are simultaneously operated to lift or lower the support frame 36 while keeping the support frame 36 horizontal, then the guided body B4 would remain stationary (not shown).

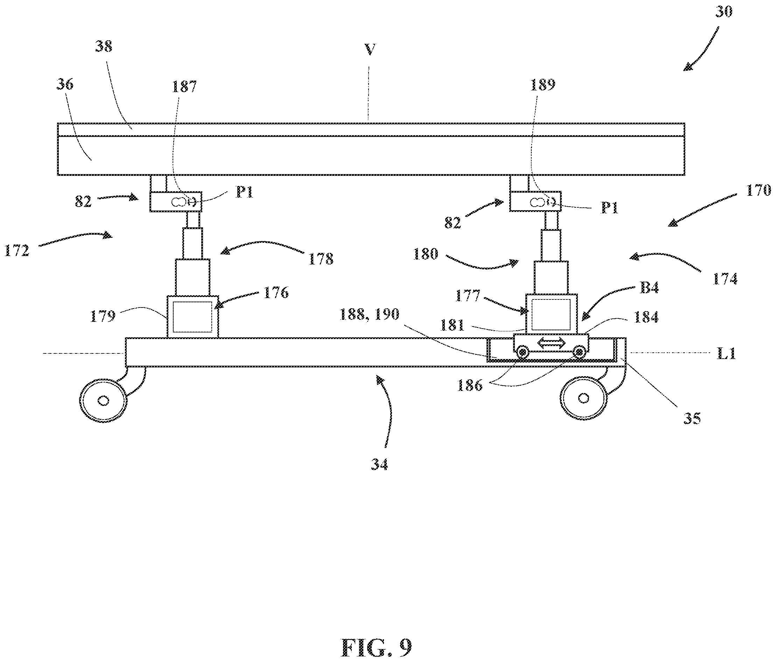

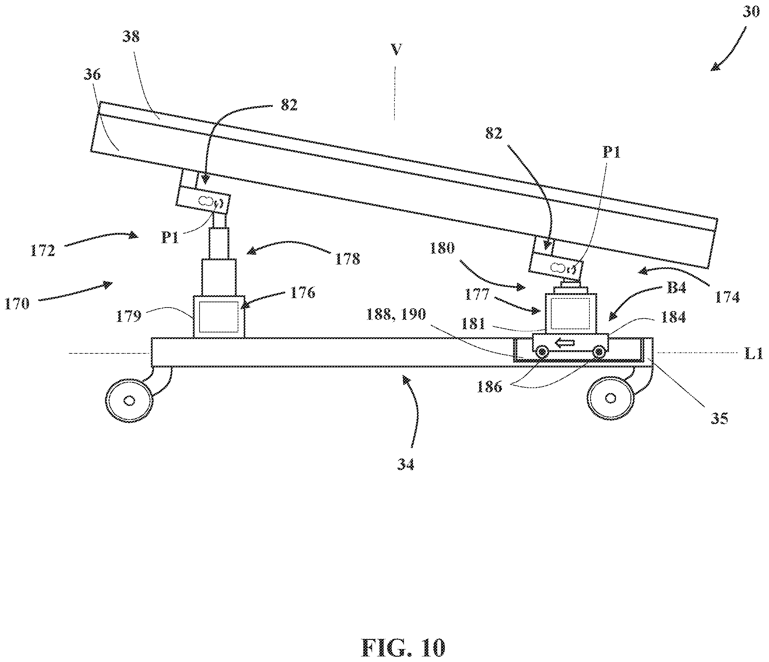

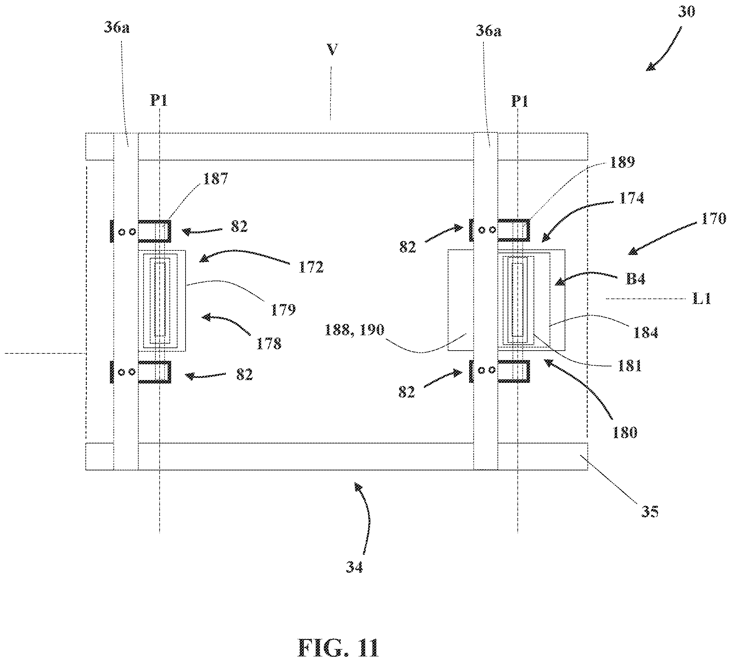

Figures 9 through 11 show the same lift system 170 as shown in Figures 6 through 8, except that the load cells 82 connected to the head end column lift 178 have been rearranged to be in the same longitudinal arrangement as the other load cells 82 pivotally connected to the foot end column lift 180. In the version shown in Figures 6 through 8, the pairs of load cells 82 are mounted to the support frame 36, but in opposing orientations. In Figures 9 through 11, the pairs of load cells 82 are mounted to the support frame 36 in the same orientation.

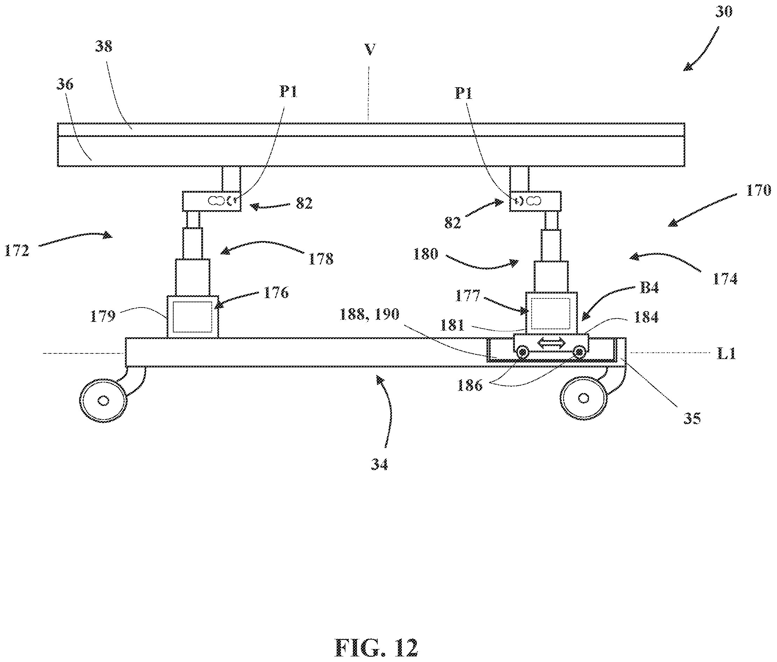

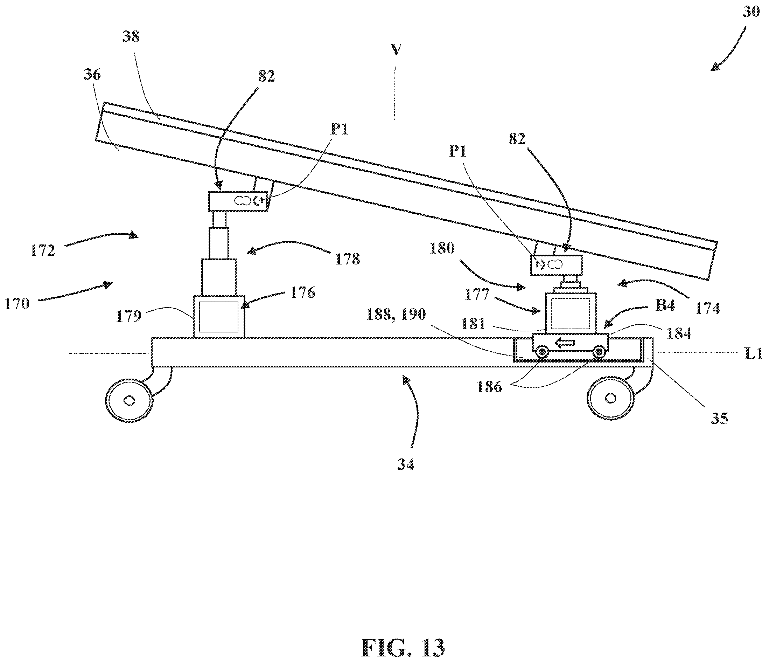

Figures 12 and 13 illustrate another alternative arrangement of the load cells 82 in which their mounting portions are fixed to the lifts 172, 174 instead of the support frame 36, and are pivotally connected to the support frame 36 at pivot connections to pivot about pivot axes P1 (compare Figures 12 and 13 to see the pivotal motion). As a result, the load cells 82 remain substantially horizontally oriented, parallel to the longitudinal axis L1 of the base 34, during movement of the support frame 36 to the one or more Trendelenburg positions (see Figure 13). Conversely, in the versions shown in Figures 1 through 11, the plurality of load cells 82 are arranged to tilt with the support frame 36 during movement of the support frame 36 to the one or more Trendelenburg positions.

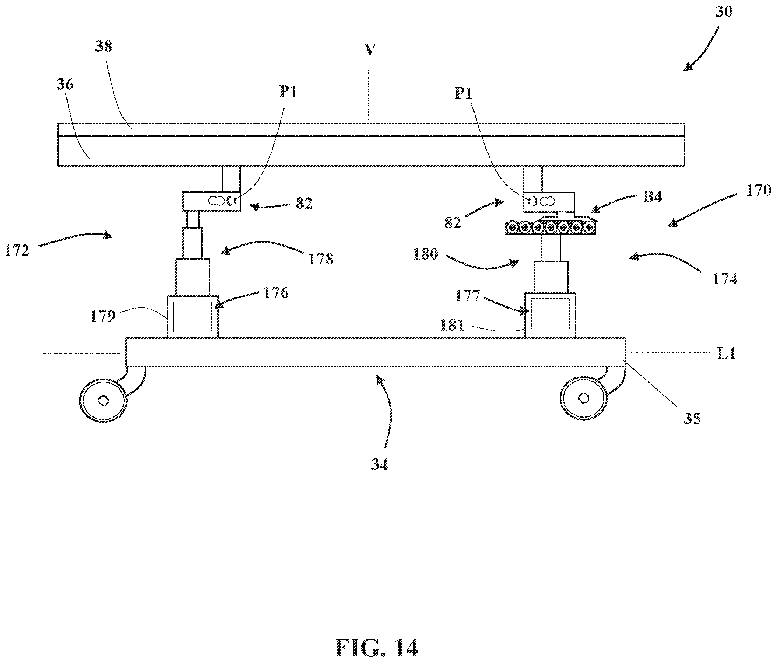

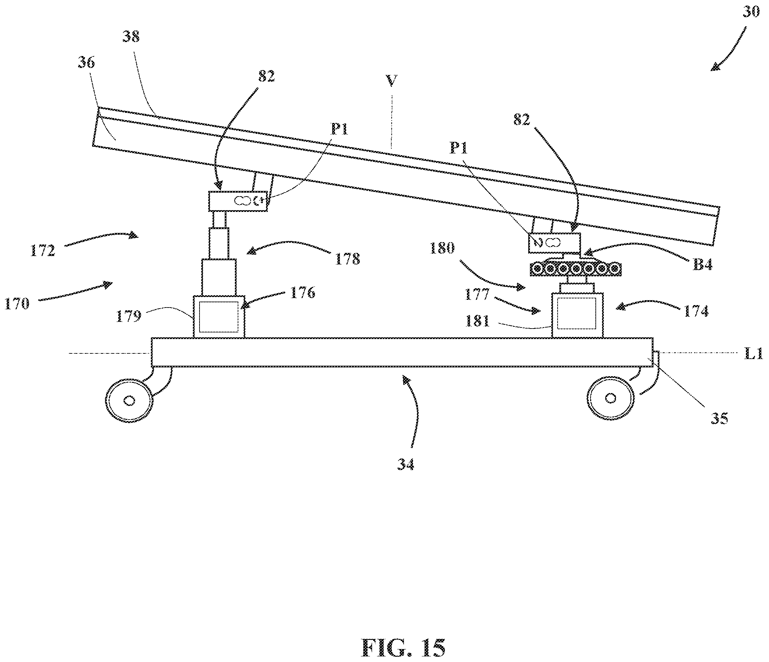

Figures 14 and 15 illustrate another alternative arrangement of the load cells 82 in which the load cells 82 at the foot end have their mounting portions fixed to the guided body B4 to slide relative to the foot end lift 174. In this version, both of the lifts 172, 174 are fixed from sliding longitudinally, even during movement of the support frame 36 to the one or more Trendelenburg positions. Instead, the load cells 82 at the foot end slide, with the guided body B4, relative to the foot end lift 174 via a sliding mechanism (shown, for example, as a plurality of rollers). In this version, all of the load cells 82 remain horizontal during movement of the support frame 36 to the one or more Trendelenburg positions.

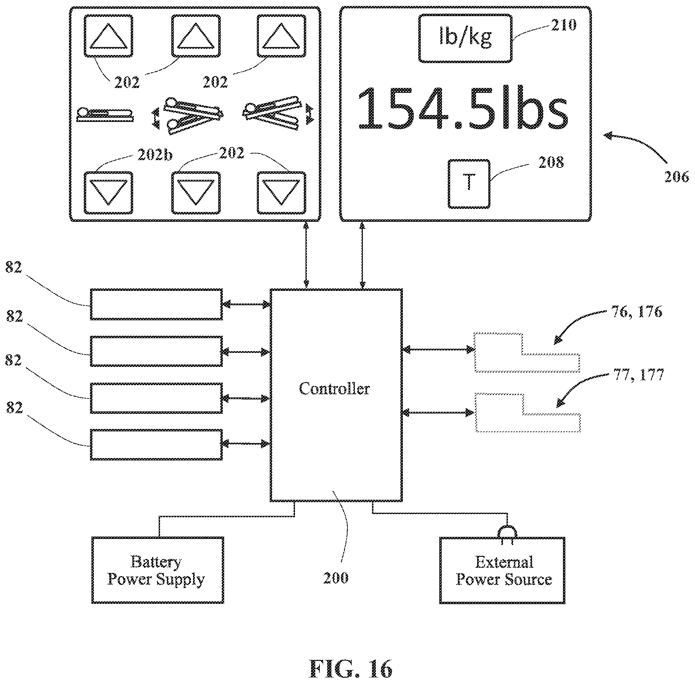

Referring to Figure 16, a control system is shown to control operation of the actuators 76, 77, 176, 177. The control system includes a controller 200 having one or more processors for processing instructions or for processing algorithms stored in memory to control operation of the actuators 76, 77, 176, 177 to coordinate movement of the actuators 76, 77, 176, 177 to evenly lift and lower the support frame 36 relative to the base 34 or to independently operate the actuators 76, 77, 176, 177 to place the support frame 36 in a Trendelenburg position, e.g., a normal or reverse Trendelenburg position. Additionally or alternatively, the controller 200 may include one or more microcontrollers, microprocessors, field programmable gate arrays, systems on a chip, discrete circuitry, and/or other suitable hardware, software, or firmware that is capable of carrying out the functions described herein. The controller 200 may be carried on-board the patient support apparatus 30 or may be remotely located. In some versions, the controller 200 is mounted to the base 34. In some versions, the controller 200 is mounted to the footboard 54. Power to the actuators 76, 77, 176, 177 and/or the controller 200 may be provided by a battery power supply and/or an external power source.

The controller 200 is coupled to the actuators 76, 77, 176, 177 in a manner that allows the controller 200 to control the actuators 76, 77, 176, 177. The controller 200 may communicate with the actuators 76, 77, 176, 177 via wired or wireless connections to perform one of more desired functions. The controller 200 may monitor a current state of the actuators 76, 77, 176, 177 via one or more sensors and determine desired states in which the actuators 76, 77, 176, 177 should be placed, based on one or more input signals that the controller 200 receives from one or more user input devices. The state of the actuators 76, 77, 176, 177 may be a position, a relative position, an angle, an energization status (e.g., on/off), or any other parameter of the actuators 76, 77, 176, 177.

A user, such as a caregiver, may actuate one or more user input devices 202, which transmit corresponding input signals to the controller 200, and the controller 200 controls operation of the actuators 76, 77, 176, 177 based on the input signals. The user input devices 202 may include any device capable of being actuated by the user and may be provided on a control panel, touchscreen, or the like. The user input devices 202 may be configured to be actuated in a variety of different ways, including but not limited to, mechanical actuation (hand, foot, finger, etc.), hands-free actuation (voice, foot, etc.), and the like. The user input devices 202 may include buttons (such as buttons corresponding to lift, lower, normal Trendelenburg, and reverse Trendelenburg), a gesture sensing device for monitoring motion of hands, feet, or other body parts of the user (such as through a camera), a microphone for receiving voice activation commands, a foot pedal, and sensors (e.g., infrared sensor such as a light bar or light beam to sense a user's body part, ultrasonic sensors, capacitive sensors, etc.). Additionally, the buttons/pedals can be physical buttons/pedals or virtually implemented buttons/pedals such as through optical projection or on a touchscreen. The buttons/pedals may also be mechanically connected or drive-by-wire type buttons/pedals where a user applied force actuates a sensor, such as a switch or potentiometer. It should be appreciated that any combination of user input devices may also be utilized. The user input devices may be located on one of the side rails 44, 46, 48, 50, the headboard 52, the footboard 54, or other suitable locations. The user input devices may also be located on a portable electronic device (e.g., iWatch^{®}, iPhone^{®}, iPad^{®}, or similar electronic devices).

During operation, when a user wishes to move the support frame 36 relative to the base 34, the user actuates one or more of the user input devices 202. For instance, in the event the user wishes to lower the support frame 36 relative to the base 34, such as moving the support frame 36 from the position shown in Figure 2 to the position shown in Figure 3, the user actuates the appropriate user input device 202 (see touchscreen button 202b, for example). Upon actuation, the controller 200 sends output signals to the actuators 76, 77 to cause simultaneous operation of the actuators 76, 77 in a manner that causes the support frame 36 to lower.

The control system may also include a scale to indicate a patient's weight and/or to detect a patient's position/movement on the patient support apparatus 30, such as in conjunction with a bed exit alert system. The scale includes the load cells 82 connected to the controller 200 to provide signals associated with loads measured by each of the load cells 82. For example, each load cell 82 may include a pair of activation leads and a pair of sensor leads. The controller 200 may include a circuit in electrical communication with the activation leads to supply electrical power to the load cell 82 via one of the activation leads with the other activation lead coupled to ground. The controller 200 may be in electrical communication with the sensor leads that provide output to the controller 200, wherein the output correlates to how much force is being exerted on the load cell 82. See, for example, the description of load cells in U.S. Patent Application No. 16/549,612, entitled "Angle Calibration Using Load Cells," filed August 23, 2019.

The output signals received from the load cells 82 via their sensor leads are collectively processed by the controller 200 using scale algorithms to determine, for example, a patient's weight to output to a display 206, as shown in Figure 16. See, for example, the methods described in U.S. Patent Application No. 16/549,612, entitled "Angle Calibration Using Load Cells". The scale may include a tare function 208 and a converter 210 to switch between kilograms and pounds. In some versions, by placing the load cells 82 between the lifts 72, 74, 172, 174 and the support frame 36, the lifts 72, 74, 172, 174 are not part of the tare weight thereby reducing the tare weight as compared to patient support apparatuses that rely on separate weigh frames located beneath the lifts.

Figure 17 illustrates one arrangement of the load cells 82 from the patient support apparatus 30 of Figures 1 through 5. In the version shown, a pair 82a of the load cells 82 are coupled to the head end legs 78 and a pair 82b of the load cells 82 are coupled to the foot end legs 80. The load cells 82 are arranged such that a load on the support frame 36 is transmitted to the plurality of load cells 82 to measure the load. Portions 36a of the support frame 36 to which the load cells 82 are mounted via one or more fasteners are shown in Figure 17. The load cells 82 may be mounted to the support frame 36 via fasteners, welding, or the like. The first ends of the legs 78, 80 are shown pivotally connected to the respective pairs of load cells 82 by pivot shafts 212.

Each of the load cells 82 includes an elongate body 214 extending longitudinally along a longitudinal axis L2 from a mounting portion 216 to a load application portion 218. The mounting portions 216 are mounted and fixed to the portions 36a of the support frame 36 as shown in Figure 17. In the versions shown, each of the plurality of load cells 82 is arranged longitudinally between the head end and the foot end of the support frame 36. The lifts 72, 74 are pivotally connected to the load application portions 218 of the load cells 82 by virtue of their corresponding legs 78, 80 being pivotally connected to the load application portions 218 at the pivot axes P1. In some versions, the mounting portions 216 are mounted and fixed to the lifts 72, 74, 172, 174 and the load application portions 218 are pivotally connected to the support frame 36 (see, e.g., Figures 12 and 13). In Figure 17, the pairs 82a, 82b of the load cells 82 are shown longitudinally aligned and oriented such that their load application portions 218 face in an opposite direction. In some versions, like shown in Figures 9 through 11, the pairs 82a, 82b of the load cells 82 are longitudinally aligned and oriented such that the load application portions 218 face in a common direction.

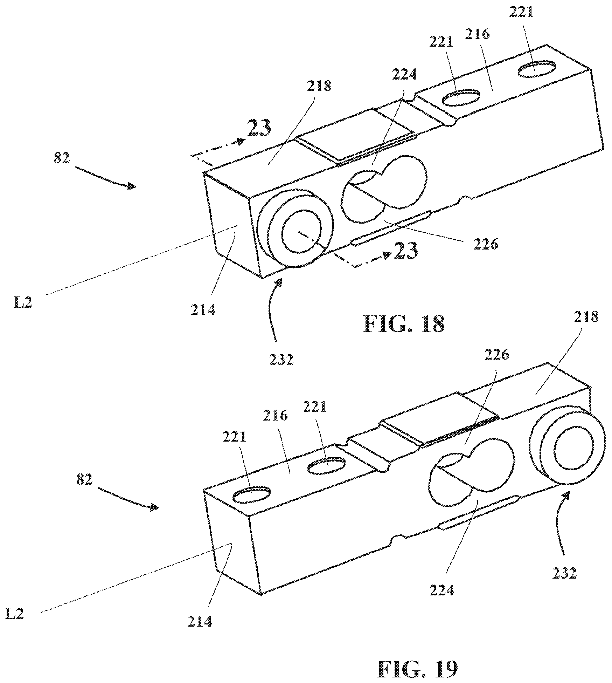

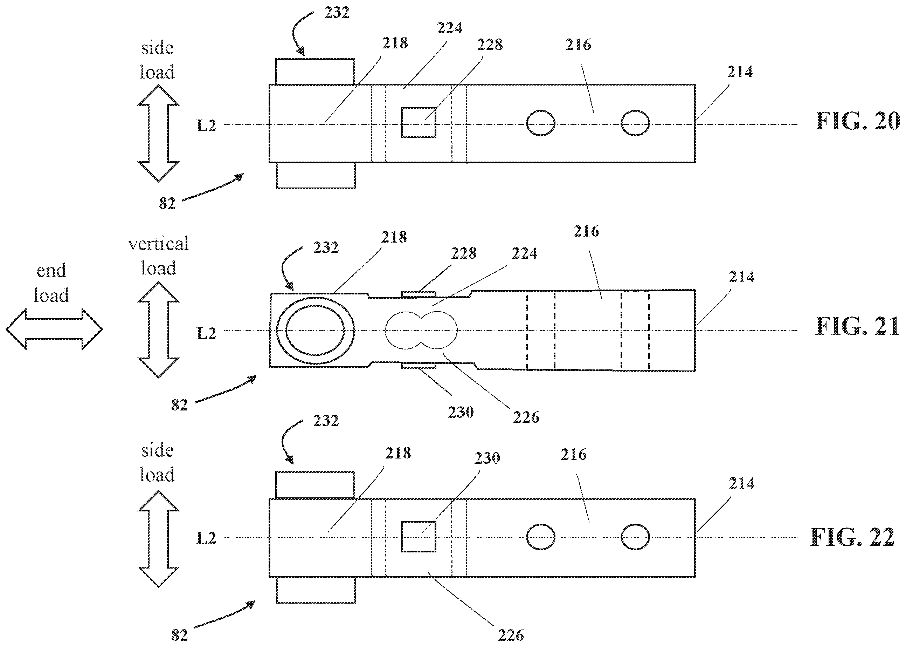

One of the load cells 82 is shown in more detail in Figures 18 through 27. In some versions, the load cells 82 are identical. In some versions, the load cells may be of different types, shapes, sizes, resolutions, etc. One type of the load cells 82 will be described in detail. Referring to Figures 18 through 22, a beam type load cell is shown. The mounting portion 216 of the load cell 82 includes a pair of bores 221 to receive fasteners to mount the mounting portion 216. The load application portion 218 of the load cell 82 receives the pivot shaft 212 used to connect one of the legs 78, 80, for example, to the load cell 82. The elongate body 214 of the load cell 82 also includes upper and lower beams 224, 226 connecting the load application portion 218 to the mounting portion 216. As best shown in Figures 20 through 22, one or more upper strain gauges 228 are coupled to the upper beam 224 and one or more lower strain gauges 230 are coupled to the lower beam 226.

Referring to Figures 20 through 22, the beams 224, 226 and strain gauges 228, 230 are arranged so that the strain gauges 228, 230 are more sensitive to loads being applied transverse to the longitudinal axis L2 as compared to loads being applied along the longitudinal axis L2. Ideally, loads are applied solely in a vertical direction, perpendicular to the longitudinal axis L2 (see "vertical load"). Under such loads, the upper and lower beams 224, 226 are placed into tension and compression, respectively, or vice versa, depending on the direction of the vertical load. The upper strain gauge 228 and the lower strain gauge 230 have positive and negative polarities, respectively, in compression. As a result, the upper strain gauge 228 and the lower strain gauge 230 are doubly sensitive to vertical loads to suitably measure the load applied.

If during measurement of the load, there is a longitudinal load ("end load") applied along the longitudinal axis L2 exactly centered between the beams 224, 226, then both beams are placed into either tension or compression, equally, and due to the opposing polarities of the strain gauges 228, 230, the associated effects on the strain gauges 228, 230 are substantially canceled. Thus, end loads on the load cell 82 may be effectively ignored by the load cell 82. However, if the end load is offset vertically from the longitudinal axis L2, the associated effects on the strain gauges 228, 230 would not effectively cancel, but could be amplified due to the opposing polarities of the strain gauges 228, 230. Loads applied laterally, transverse to the longitudinal axis L2 (see "side load"), may also be undesirable and difficult to compensate for during measurements. These loads cause complex shear/tensile/compressive loading at the strain gauges 228, 230. Twisting of the load cell 82 about the longitudinal axis L2 is also undesirable and causes internal shear loading at the strain gauges 228, 230 in opposite directions in the beams 224, 226. Such twisting can also be difficult to compensate for during measurements and may cause inaccurate readings. For these reasons, it may be desirable to minimize side loads and twisting of the load cells 82.

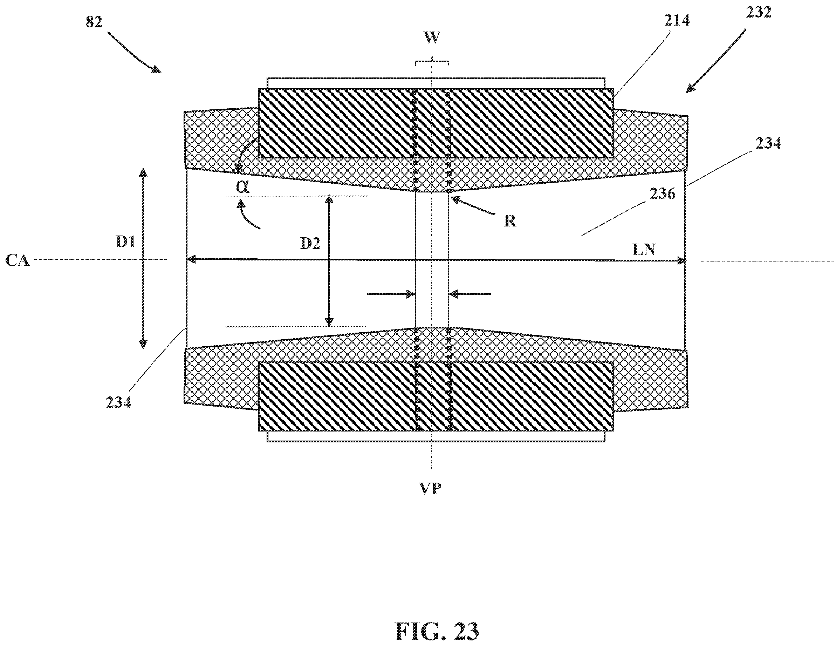

Referring to Figure 23, the load cell 82 has a bushing 232 that is shaped and configured to minimize side loads and twisting of the load cell 82 and to focus application of loads to a small, load application region R. The bushing 232 defines a pair of side openings 234 and a pivot shaft passage 236 extending between the side openings 234. The pivot shaft passage 236 receives the pivot shaft 212. Each of the side openings 234 has a first diameter D1 and the pivot shaft passage 236 has a second diameter D2 in the load application region R. The second diameter D2 is smaller than the first diameter D1.

The load application region R is located midway through the pivot shaft passage 236 and has a width W of less than 50% of a length LN of the pivot shaft passage 236, less than 30% of the length LN of the pivot shaft passage 236, or less than 10% of the length LN of the pivot shaft passage 236. The load application region R defines a plane with the width W along which loads are concentrated. In some versions, the load application region R has a width W of less than 2,54 cm (1.0 inches), less than 1,524 cm (0.6 inches), less than 1,016 cm (0.4 inches), or less than 0,762 cm (0.3 inches). The elongate body 214 defines a vertical plane VP extending midway through the elongate body 214 and the vertical plane VP passes through a middle of the load application region R. Accordingly, the load application region R represents a relatively narrow region within the pivot shaft passage 236, that is centered in the pivot shaft passage 236, and at which loads are ideally applied to the load cell 82.

The pivot shaft passage 236 tapers down from the first diameter D1 at each of the pair of side openings 234 to the second diameter D2 at the load application region R. The taper may form an angle a of at least 3 degrees, at least 5 degrees, at least 10 degrees, or at least 15 degrees relative to a central axis CA of the pivot shaft passage 236. The taper between the side openings 234 and the load application region R provides free space to receive the pivot shaft 212 in the event that tilting of the pivot shaft 212 relative to the central axis CA occurs in the pivot shaft passage 236. This free space allows the pivot shaft 212 to tilt to at least a limited extent before causing twisting loads to be realized by the strain gauges 228, 230.

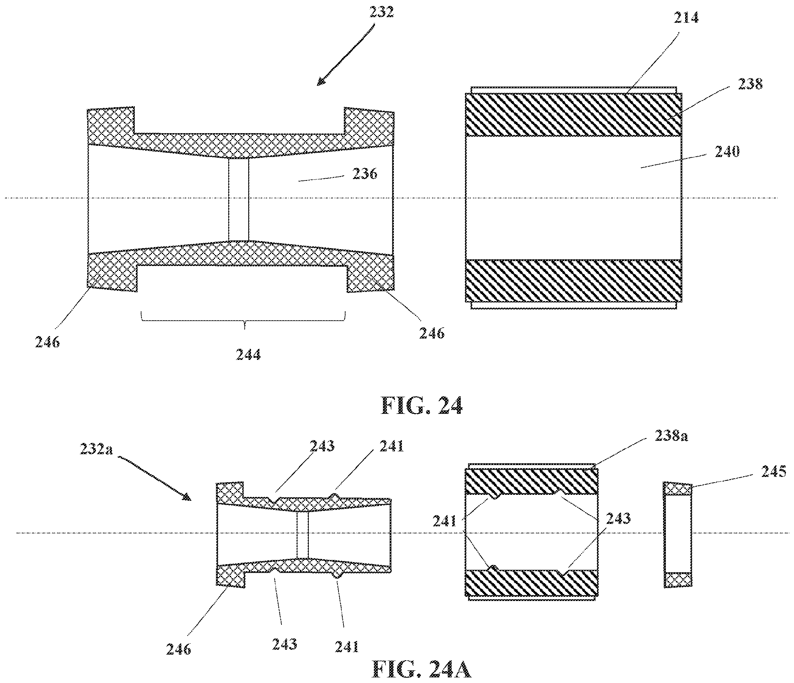

Referring to Figure 24, the elongate body 214 includes a block 238 and the bushing 232 is coupled to the block 238 to define the pivot shaft passage 236. The block 238 defines a throughbore 240 and the bushing 232 is located in the throughbore 240. The bushing 232 has a central bushing portion 244 and side bushing portions 246. The bushing 232 may be insert molded in the throughbore 240, press fit into the throughbore 240 (by first softening the bushing 232 and then inserting), formed in two pieces and fastened/adhered together in the throughbore 240, or otherwise disposed in the throughbore 240. The block 238 is formed at least partially of metal and the bushing 232 is formed at least partially of plastic. The bushing 232 may be formed at least partially of, and/or coated with, low friction and low wear materials, e.g., PTFE, to facilitate movement of the pivot shaft 212 in the bushing 232.

Referring to Figure 24A, an alternative block 238a and bushing 232a is shown having interlocking features 241, 243 to facilitate connection. The interlocking features may include annular detent ribs 241 that fit within annual detent pockets 243. Other forms of snap-fit type connections are also contemplated. In some cases, there is a single set of such interlocking features, or there may be multiple sets (as shown). The bushing 232a may be additionally, or alternatively, press fit into the block 238a. In Figure 24A, the bushing 232a is shown as being two-piece with a separate cap 245. The cap 245 may be attached about an end of the bushing 232a once the other piece of the bushing 232a is inserted through the block 238a. When the cap 245 is attached, the resulting bushing 232a resembles the bushing 232 shown in Figure 24. The cap 245 may be attached via welding, fasteners, adhesive, and/or press-fit, or the like.

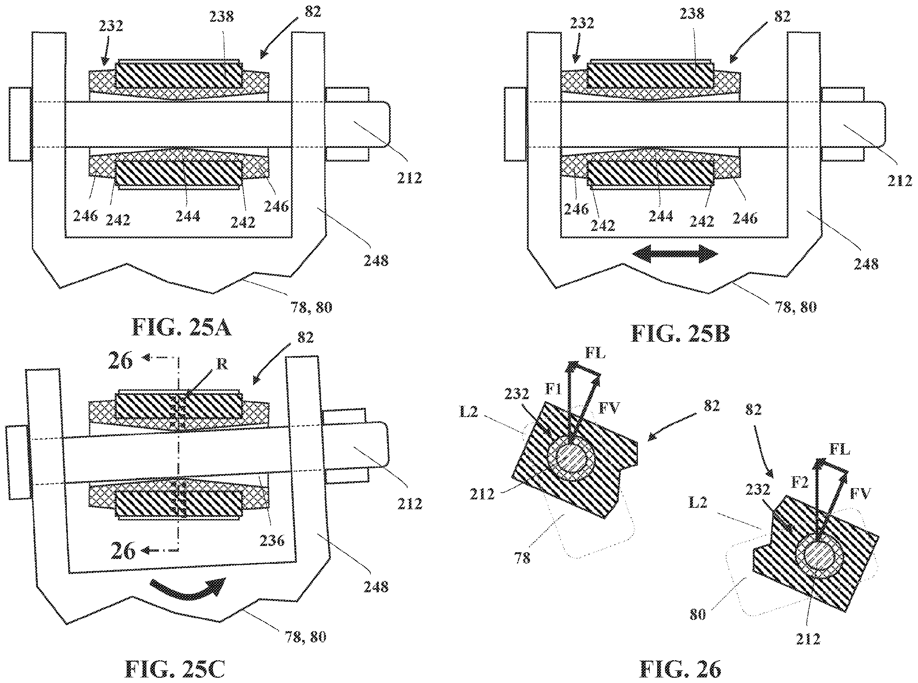

Referring to Figures 25A through 25C, the block 238 has sides 242 and the side bushing portions 246 extend from the sides 242 to abut and bear against a pivot bracket 248, e.g., such as a pivot bracket of the leg 78, 80 that is pivotally connected to the load cell 82 via the pivot shaft 212 (see Figure 25B). Figure 25C illustrates the effects of slight tilting of the pivot shaft 212 without causing corresponding twisting of the load cell 82 - owing to the tapered shape of the pivot shaft passage 236. Accordingly, loads acting on the pivot shaft 212 are still largely applied in the load application region R and in the vertical direction and/or end direction.

In some arrangements of the load cells 82 previously described, the load cells 82 tilt with the support frame 36 during movement to the Trendelenburg positions (see, e.g., Figure 4A). However, end loads that might otherwise occur during such tilting are minimized owing to the head end lift 72 (or foot end lift 74 in some versions) being configured to slide and compensate for such tilting movement via the guided bodies B1, B3, B4 and their translation along the base 34. The load cells 82, by virtue of being aligned longitudinally with respect to the support frame 36, further takes advantage of the load cells 82 being less sensitive to end loads.

Figure 26 shows such tilting of two of the load cells 82 (one attached to a head end leg 78 and the other attached to a foot end leg 80). Figure 26 illustrates the resulting application of loads F1, F2 acting on the load cells 82 through the pivot shafts 212. Due to the tilt of the load cells 82, the loads F1, F2 are applied at an angle to the longitudinal axis L2 of the load cells 82, but the loads F1, F2 are still applied along the plane defined by the load application region R for the reasons previously discussed. Each of the loads F1, F2 has a vertical component FV directed perpendicular to the longitudinal axis L2 and a longitudinal component FL directed parallel to the longitudinal axis L2. Since the application of the longitudinal components FL are not exactly along the longitudinal axis L2, there may be some non-canceling end loading effects on the strain gauges 228, 230 for each particular load cell 82. However, because the load cells 82 are placed in opposing orientations, the collective effects on the load cells 82 tend to cancel. As a result, the measured loads are substantially based on the vertical components FV of the loads F1, F2.

A simple correction can be applied to the measurements taken by each load cell 82 to determine the loads F1, F2. This correction is calculated by measuring the angle of the load cells 82 (e.g., the Trendelenburg angle can be measured via an accelerometer, gyroscope, tilt sensor, or other suitable means connected to the controller 200) and simply determining the loads F1, F2 based on a cosine function of the measured angle and applying the cosine function to the measured loads (e.g., FV). The correction factor is based on the relationship of: L = W · cos (T), where: L is the collective measurement of the load; W is a total weight of the patient; and T is the Trendelenburg angle. See, for example, the correction algorithm and associated components described in U.S. Patent Application No. 16/549,612, entitled "Angle Calibration Using Load Cells". Such correction, however, would not be needed in the arrangement of load cells 82 shown in Figures 12 and 13, since the loads F1, F2 in that arrangement would be substantially applied in the vertical direction owing to the load cells 82 substantially maintaining their horizontal arrangement (+/- 5 degrees) during tilting of the support frame 36 when moving the support frame 36 to one or more Trendelenburg positions.

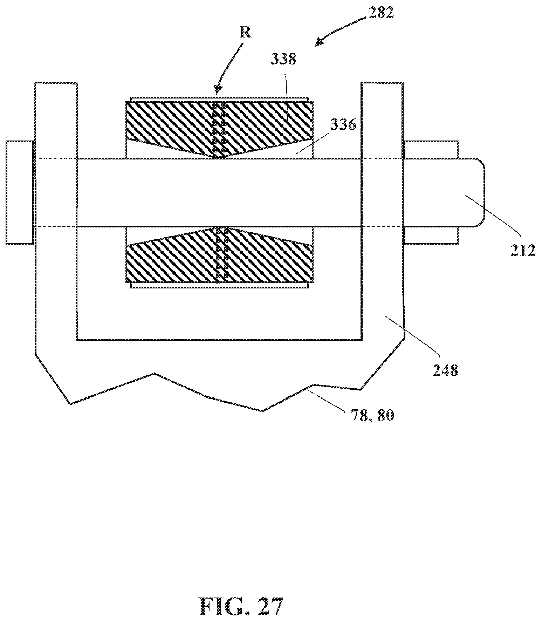

Figure 27 illustrates an version of a load cell 282 in which the block 338 of the load cell 282 is shaped to provide a tapered pivot shaft passage 336 like that provided by the bushing 232 described above to yield a small load application region R in which loads from the pivot shaft 212 can be concentrated.

## Claims

1. A patient support apparatus (30) comprising:
a support structure (32) including a base (34), a support frame (36), and a patient support deck (38), the support frame (36) extending longitudinally from a first longitudinal end to a second longitudinal end and the base (34) having a guide (84, 112);
a first lift (72) to lift or lower the first longitudinal end of the support frame (36) relative to the base (34), the first lift (72) having a guided body (B1, B3) movable longitudinally relative to the base (34) along the guide (84, 112);
a second lift (74) to lift or lower the second longitudinal end of the support frame (36) relative to the base (34), the first lift (72) and the second lift (74) being independently operable to place the support frame (36) in one or more Trendelenburg positions in which the first longitudinal end and the second longitudinal end are at different heights relative to the base (34); and
a plurality of load cells (82), with at least one load cell (82) coupled to the first lift (72) to act between the first lift (72 and the support frame (36) and at least one load cell (82) coupled to the second lift (74) to act between the second lift (74) and the support frame (36) such that a load on the support frame (36) is transmitted to the plurality of load cells (82) to measure the load,
wherein the guided body (B1, B3) is arranged to move longitudinally relative to the base (34) in response to operation of the second lift (74) to move the support frame (36) to the one or more Trendelenburg positions such that the first lift (72) moves longitudinally toward the second lift (74) to accommodate movement of the support frame (36) to the one or more Trendelenburg positions.

2. The patient support apparatus (30) of claim 1, wherein the first longitudinal end is one of a head end and a foot end and the second longitudinal end is the other of the head end and the foot end.

3. The patient support apparatus (30) of claim 1 or 2, wherein each of the plurality of load cells (82) includes an elongate body (214) extending longitudinally from a mounting portion (216) to a load application portion (218).

4. The patient support apparatus (30) of claim 3 as far as dependent on claim 2, wherein each of the plurality of load cells (82) is arranged longitudinally between the head end and the foot end of the support frame (36).

5. The patient support apparatus (30) of claim 4, wherein the at least one load cell (82) coupled to the first lift (72) is a first pair of load cells (82) and the at least one load cell (82) coupled to the second lift (74) is a second pair of load cells (82).

6. The patient support apparatus (30) of claim 5, wherein the first lift (72, 172) is pivotally connected to the load application portions (218) of the first pair of load cells (82) and the second lift (74) is pivotally connected to the load application portions (218) of the second pair of load cells (82), and wherein the mounting portions (216) of the first pair of load cells (82) are fixed to the support frame (36) and the mounting portions (216) of the second pair of load cells (82) are fixed to the support frame (36).

7. The patient support apparatus (30) of claim 5, wherein the mounting portions (216) of the first pair of load cells (82) are fixed to the first lift (72) and the mounting portions (216) of the second pair of load cells (82) are fixed to the second lift (74), and wherein the load application portions (218) of the first pair of load cells (82) are pivotally connected to the support frame (36) and load application portions (218) of the second pair of load cells (82) are pivotally connected to the support frame (36).

8. The patient support apparatus (30) of any one of claims 5 to 7, wherein the first lift (72) includes:
one or more first legs (78) extending from the first pair of load cells (82) to the base (34), wherein the one or more first legs (78) are slidably coupled to the base (34) to slide relative to the base (34);
one or more links (110) pivotally connected to the one or more first legs (78) and extending from the one or more first legs (78) to the base (34); and
a first actuator (76) operably coupled to the one or more first legs (78) and the one or more links (110),
wherein the guided body (B1, B3) is pivotally connected to the one or more links (110), the guided body (B1, B3) being coupled to the base (34) to translate longitudinally along the guide (84, 112) relative to the base (34) during movement to the one or more Trendelenburg positions; and
wherein the second lift (74) includes:
one or more second legs (80) extending from the second pair of load cells (82) to the base (34), wherein the one or more second legs (80) are slidably coupled to the base (34) to slide relative to the base (34); and
a second actuator (77) operably coupled to the one or more second legs (80).

9. The patient support apparatus (30) of any one of claims 5 to 8, wherein the first pair of load cells (82) are longitudinally aligned with the second pair of load cells (82) and oriented such that the load application portions (218) of the first pair of load cells (82) face in an opposite direction relative to the load application portions (218) of the second pair of load cells (82).

10. The patient support apparatus (30) of any one of claims 5 to 8, wherein the first pair of load cells (82) are longitudinally aligned with the second pair of load cells (82) and oriented such that the load application portions (218) of the first pair of load cells (82) face in a common direction with the load application portions (218) of the second pair of load cells (82).

11. The patient support apparatus (30) of any one of claims 5 to 10, wherein the first pair of load cells (82) and the second pair of load cells (82) are arranged to tilt with the support frame (36) during movement of the support frame (36) to the one or more Trendelenburg positions.

12. The patient support apparatus (30) of any one of claims 5 to 10, wherein the first pair of load cells (82) and the second pair of load cells (82) are arranged to remain substantially horizontal during movement of the support frame (36) to the one or more Trendelenburg positions.

13. The patient support apparatus (30) of any one of claims 1 to 12, wherein the guided body (B1, B3) is arranged to move longitudinally relative to the base (34) in response to operation of the first lift (72) to move the support frame (36) to the one or more Trendelenburg positions.

14. The patient support apparatus (30) of any one of claims 1 to 13, comprising a plurality of side rails (44, 46, 48, 50) coupled to the support structure (32) and a plurality of caster wheels (58) coupled to the base (34).

## Patentansprüche

1. Patiententragevorrichtung (30), umfassend:
eine Tragestruktur (32) mit einer Basis (34), einem Tragerahmen (36) und einem Patiententragedeck (38), wobei sich der Tragerahmen (36) longitudinal von einem ersten longitudinalen Ende zu einem zweiten longitudinalen Ende erstreckt und die Basis (34) eine Führung (84, 112) aufweist;
eine erste Hebevorrichtung (72) zum Anheben oder Absenken des ersten longitudinalen Endes des Tragerahmens (36) relativ zu der Basis (34), wobei die erste Hebevorrichtung (72) einen Führungskörper (B1, B3) aufweist, der longitudinal relativ zu der Basis (34) entlang der Führung (84, 112) bewegbar ist;
eine zweite Hebevorrichtung (74) zum Anheben oder Absenken des zweiten longitudinalen Endes des Tragerahmens (36) relativ zu der Basis (34), wobei die erste Hebevorrichtung (72) und die zweite Hebevorrichtung (74) unabhängig voneinander betätigbar sind, um den Tragerahmen (36) in ein oder mehrere Trendelenburg-Lagerungen zu bringen, in denen sich das erste longitudinale Ende und das zweite longitudinale Ende auf unterschiedlichen Höhen relativ zu der Basis (34) befinden; und
eine Mehrzahl von Kraftmesszellen (82), wobei mindestens eine Kraftmesszelle (82) mit der ersten Hebevorrichtung (72) gekoppelt ist, um zwischen der ersten Hebevorrichtung (72) und dem Tragerahmen (36) zu wirken, und mindestens eine Kraftmesszelle (82) mit der zweiten Hebevorrichtung (74) gekoppelt ist, um zwischen der zweiten Hebevorrichtung (74) und dem Tragerahmen (36) zu wirken, so dass eine Last auf dem Tragerahmen (36) auf die Mehrzahl von Kraftmesszellen (82) übertragen wird, um die Last zu messen,
wobei der Führungskörper (B1, B3) so angeordnet ist, dass er sich in Reaktion auf die Betätigung der zweiten Hebevorrichtung (74) in longitudinaler Richtung relativ zu der Basis (34) bewegt, um den Tragerahmen (36) in die ein oder mehrere Trendelenburg-Lagerungen zu bewegen, so dass sich die erste Hebevorrichtung (72) in longitudinaler Richtung auf die zweite Hebevorrichtung (74) zu bewegt, um die Bewegung des Tragerahmens (36) in die ein oder mehrere Trendelenburg-Lagerungen auszugleichen.

2. Patiententragevorrichtung (30) nach Anspruch 1, wobei das erste longitudinale Ende eines von einem Kopfende und einem Fußende ist und das zweite longitudinale Ende das andere von dem Kopfende und dem Fußende ist.

3. Patiententragevorrichtung (30) nach Anspruch 1 oder 2, wobei jede der Mehrzahl von Kraftmesszellen (82) einen länglichen Körper (214) aufweist, der sich longitudinal von einem Halteabschnitt (216) zu einem Krafteinleitungsabschnitt (218) erstreckt.

4. Patiententragevorrichtung (30) nach Anspruch 3, soweit von Anspruch 2 abhängig, wobei jede der Mehrzahl von Kraftmesszellen (82) longitudinal zwischen dem Kopfende und dem Fußende des Tragerahmens (36) angeordnet ist.

5. Patiententragevorrichtung (30) nach Anspruch 4, wobei die mindestens eine Kraftmesszelle (82), die mit der ersten Hebevorrichtung (72) gekoppelt ist, ein erstes Paar von Kraftmesszellen (82) ist und die mindestens eine Kraftmesszelle (82), die mit der zweiten Hebevorrichtung (74) gekoppelt ist, ein zweites Paar von Kraftmesszellen (82) ist.

6. Patiententragevorrichtung (30) nach Anspruch 5, wobei die erste Hebevorrichtung (72, 172) schwenkend mit den Krafteinleitungsabschnitten (218) des ersten Paares von Kraftmesszellen (82) verbunden ist und die zweite Hebevorrichtung (74) schwenkend mit den Krafteinleitungsabschnitten (218) des zweiten Paares von Kraftmesszellen (82) verbunden ist, und wobei die Halteabschnitte (216) des ersten Paares von Kraftmesszellen (82) an dem Tragerahmen (36) befestigt sind und die Halteabschnitte (216) des zweiten Paares von Kraftmesszellen (82) an dem Tragerahmen (36) befestigt sind.

7. Patiententragevorrichtung (30) nach Anspruch 5, wobei die Halteabschnitte (216) des ersten Paares von Kraftmesszellen (82) an der ersten Hebevorrichtung (72) befestigt sind und die Halteabschnitte (216) des zweiten Paares von Kraftmesszellen (82) an der zweiten Hebevorrichtung (74) befestigt sind, und wobei die Krafteinleitungsabschnitte (218) des ersten Paares von Kraftmesszellen (82) schwenkend mit dem Tragerahmen (36) verbunden sind und die Krafteinleitungsabschnitte (218) des zweiten Paares von Kraftmesszellen (82) schwenkend mit dem Tragerahmen (36) verbunden sind.

8. Patiententragevorrichtung (30) nach einem der Ansprüche 5 bis 7, wobei die erste Hebevorrichtung (72) umfasst:
ein oder mehrere erste Beine (78), die sich von dem ersten Paar Kraftmesszellen (82) zu der Basis (34) erstrecken, wobei die ein oder mehreren ersten Beine (78) gleitend mit der Basis (34) gekoppelt sind, um relativ zu der Basis (34) zu gleiten;
ein oder mehrere Verbindungsstücke (110), die schwenkend mit den ein oder mehreren ersten Beinen (78) verbunden sind und sich von den ein oder mehreren ersten Beinen (78) zu der Basis (34) erstrecken; und
einen ersten Aktuator (76), der mit den ein oder mehreren ersten Beinen (78) und den ein oder mehreren Verbindungsstücken (110) funktional gekoppelt ist,
wobei der Führungskörper (B1, B3) schwenkend mit den ein oder mehreren Verbindungsstücken (110) verbunden ist, wobei der Führungskörper (B1, B3) mit der Basis (34) gekoppelt ist, um sich während der Bewegung in die ein oder mehrere Trendelenburg-Lagerungen longitudinal entlang der Führung (84, 112) relativ zu der Basis (34) zu verschieben; und wobei die zweite Hebevorrichtung (74) umfasst:
ein oder mehrere zweite Beine (80), die sich von dem zweiten Paar Kraftmesszellen (82) zu der Basis (34) erstrecken, wobei die ein oder mehreren zweiten Beine (80) gleitend mit der Basis (34) gekoppelt sind, um relativ zu der Basis (34) zu gleiten; und
einen zweiten Aktuator (77), der mit den ein oder mehreren zweiten Beinen (80) funktional gekoppelt ist.

9. Patiententragevorrichtung (30) nach einem der Ansprüche 5 bis 8, wobei das erste Paar Kraftmesszellen (82) longitudinal mit dem zweiten Paar Kraftmesszellen (82) ausgerichtet ist und so orientiert ist, dass die Krafteinleitungsabschnitte (218) des ersten Paares Kraftmesszellen (82) in eine entgegengesetzte Richtung relativ zu den Krafteinleitungsabschnitten (218) des zweiten Paares Kraftmesszellen (82) weisen.

10. Patiententragevorrichtung (30) nach einem der Ansprüche 5 bis 8, wobei das erste Paar Kraftmesszellen (82) longitudinal mit dem zweiten Paar Kraftmesszellen (82) ausgerichtet ist und so orientiert ist, dass die Krafteinleitungsabschnitte (218) des ersten Paares Kraftmesszellen (82) in eine gemeinsame Richtung mit den Krafteinleitungsabschnitten (218) des zweiten Paares Kraftmesszellen (82) weisen.

11. Patiententragevorrichtung (30) nach einem der Ansprüche 5 bis 10, wobei das erste Paar Kraftmesszellen (82) und das zweite Paar Kraftmesszellen (82) so angeordnet sind, dass sie sich mit dem Tragerahmen (36) während der Bewegung des Tragerahmens (36) in die ein oder mehrere Trendelenburg-Lagerungen neigen.

12. Patiententragevorrichtung (30) nach einem der Ansprüche 5 bis 10, wobei das erste Paar Kraftmesszellen (82) und das zweite Paar Kraftmesszellen (82) so angeordnet sind, dass sie während der Bewegung des Tragerahmens (36) in die ein oder mehrere Trendelenburg-Lagerungen im Wesentlichen horizontal bleiben.

13. Patiententragevorrichtung (30) nach einem der Ansprüche 1 bis 12, wobei der Führungskörper (B1, B3) so angeordnet ist, dass er sich in Reaktion auf die Betätigung der ersten Hebevorrichtung (72) longitudinal relativ zu der Basis (34) bewegt, um den Tragerahmen (36) in die ein oder mehrere Trendelenburg-Lagerungen zu bewegen.

14. Patiententragevorrichtung (30) nach einem der Ansprüche 1 bis 13, umfassend eine Mehrzahl von Seitenschienen (44, 46, 48, 50), die mit der Tragestruktur (32) gekoppelt sind, und eine Mehrzahl von Laufrollen (58), die mit der Basis (34) gekoppelt sind.

## Revendications

1. Appareil de support pour patient (30) comprenant :
une structure de support (32) incluant une base (34), un cadre de support (36) et une plateforme de support pour patient (38), le cadre de support (36) s'étendant longitudinalement d'une première extrémité longitudinale à une seconde extrémité longitudinale et la base (34) comportant un guide (84, 112) ;
un premier élévateur (72) pour lever ou abaisser la première extrémité longitudinale du cadre de support (36) par rapport à la base (34), le premier élévateur (72) comportant un corps guidé (B1, B3) mobile longitudinalement par rapport à la base (34) le long du guide (84, 112) ;
un second élévateur (74) pour lever ou abaisser la seconde extrémité longitudinale du cadre de support (36) par rapport à la base (34), le premier élévateur (72) et le second élévateur (74) étant actionnables indépendamment pour placer le cadre de support (36) dans une ou plusieurs positions de Trendelenburg dans lesquelles la première extrémité longitudinale et la seconde extrémité longitudinale sont à des hauteurs différentes par rapport à la base (34) ; et
une pluralité de cellules de charge (82), au moins une cellule de charge (82) étant couplée au premier élévateur (72) pour agir entre le premier élévateur (72) et le cadre de support (36), et au moins une cellule de charge (82) étant couplée au second élévateur (74) pour agir entre le second élévateur (74) et le cadre de support (36), de sorte qu'une charge sur le cadre de support (36) est transmise à la pluralité de cellules de charge (82) pour mesurer la charge,
dans lequel le corps guidé (B1, B3) est agencé pour se déplacer longitudinalement par rapport à la base (34) en réponse au fonctionnement du second élévateur (74) afin de déplacer le cadre de support (36) vers lesdites une ou plusieurs positions de Trendelenburg, de sorte que le premier élévateur (72) se déplace longitudinalement vers le second élévateur (74) pour accompagner le mouvement du cadre de support (36) vers lesdites une ou plusieurs positions de Trendelenburg.

2. Appareil de support de patient (30) selon la revendication 1, dans lequel la première extrémité longitudinale est l'une d'une extrémité tête et d'une extrémité pied et la seconde extrémité longitudinale est l'autre de l'extrémité tête et de l'extrémité pied.

3. Appareil de support de patient (30) selon la revendication 1 ou 2, dans lequel chaque cellule de la pluralité de cellules de charge (82) comprend un corps allongé (214) s'étendant longitudinalement d'une partie de montage (216) à une partie d'application de charge (218).

4. Appareil de support de patient (30) selon la revendication 3, dans la mesure où elle dépend de la revendication 2, dans lequel chaque cellule de la pluralité de cellules de charge (82) est disposée longitudinalement entre l'extrémité tête et l'extrémité pied du cadre de support (36).

5. Appareil de support de patient (30) selon la revendication 4, dans lequel ladite au moins une cellule de charge (82) couplée au premier élévateur (72) est une première paire de cellules de charge (82) et ladite au moins une cellule de charge (82) couplée au second élévateur (74) est une seconde paire de cellules de charge (82).

6. Appareil de support de patient (30) selon la revendication 5, dans lequel le premier élévateur (72, 172) est relié de manière pivotante aux parties d'application de charge (218) de la première paire de cellules de charge (82) et le second élévateur (74) est relié de manière pivotante aux parties d'application de charge (218) de la seconde paire de cellules de charge (82), et dans lequel les parties de montage (216) de la première paire de cellules de charge (82) sont fixées au cadre de support (36) et les parties de montage (216) de la seconde paire de cellules de charge (82) sont fixées au cadre de support (36).

7. Appareil de support de patient (30) selon la revendication 5, dans lequel les parties de montage (216) de la première paire de cellules de charge (82) sont fixées au premier élévateur (72) et les parties de montage (216) de la seconde paire de cellules de charge (82) sont fixées au second élévateur (74), et dans lequel les parties d'application de charge (218) de la première paire de cellules de charge (82) sont reliées de manière pivotante au cadre de support (36) et les parties d'application de charge (218) de la seconde paire de cellules de charge (82) sont reliées de manière pivotante au cadre de support (36).

8. Appareil de support de patient (30) selon l'une quelconque des revendications 5 à 7, dans lequel le premier élévateur (72) comprend :
un ou plusieurs premiers segments (78) s'étendant de la première paire de cellules de charge (82) à la base (34), dans lequel lesdits un ou plusieurs premiers segments (78) sont accouplés de manière coulissante à la base (34) pour coulisser par rapport à la base (34) ;
une ou plusieurs liaisons (110) reliées pivotantes auxdits un ou plusieurs premiers segments (78) et s'étendant desdits un ou plusieurs premiers segments (78) à la base (34) ; et
un premier actionneur (76) couplé fonctionnellement auxdits un ou plusieurs premiers segments (78) et auxdites une ou plusieurs liaisons (110).
dans lequel le corps guidé (B1, B3) est relié de manière pivotante auxdites une ou plusieurs liaisons (110), le corps guidé (B1, B3) étant accouplé à la base (34) pour se déplacer longitudinalement le long du guide (84, 112) par rapport à la base (34) lors du déplacement vers lesdites une ou plusieurs positions de Trendelenburg ; et
dans lequel le second élévateur (74) comprend :
un ou plusieurs seconds segments (80) s'étendant de la seconde paire de cellules de charge (82) à la base (34), dans lequel lesdits un ou plusieurs seconds segments (80) sont accouplés de manière coulissante à la base (34) pour coulisser par rapport à la base (34) ; et
un second actionneur (77) couplé fonctionnellement auxdits un ou plusieurs seconds segments (80).

9. Appareil de support de patient (30) selon l'une quelconque des revendications 5 à 8, dans lequel la première paire de cellules de charge (82) sont alignées longitudinalement avec la seconde paire de cellules de charge (82) et orientées de telle sorte que les parties d'application de charge (218) de la première paire de cellules de charge (82) sont orientées dans une direction opposée par rapport aux parties d'application de charge (218) de la seconde paire de cellules de charge (82).

10. Appareil de support de patient (30) selon l'une quelconque des revendications 5 à 8, dans lequel la première paire de cellules de charge (82) sont alignées longitudinalement avec la seconde paire de cellules de charge (82) et orientées de telle sorte que les parties d'application de charge (218) de la première paire de cellules de charge (82) sont orientées dans une direction commune aux parties d'application de charge (218) de la seconde paire de cellules de charge (82).

11. Appareil de support de patient (30) selon l'une quelconque des revendications 5 à 10, dans lequel la première paire de cellules de charge (82) et la seconde paire de cellules de charge (82) sont agencées pour s'incliner avec le cadre de support (36) lors du déplacement du cadre de support (36)vers lesdites une ou plusieurs positions de Trendelenburg.

12. Appareil de support de patient (30) selon l'une quelconque des revendications 5 à 10, dans lequel la première paire de cellules de charge (82) et la seconde paire de cellules de charge (82) sont agencées pour rester sensiblement horizontales lors du déplacement du cadre de support (36) vers lesdites une ou plusieurs positions de Trendelenburg.

13. Appareil de support de patient (30) selon l'une quelconque des revendications 1 à 12, dans lequel le corps guidé (B1, B3) est agencé pour se déplacer longitudinalement par rapport à la base (34) en réponse au fonctionnement du premier élévateur (72) pour déplacer le cadre de support (36) vers lesdites une ou plusieurs positions de Trendelenburg.

14. Appareil de support de patient (30) selon l'une quelconque des revendications 1 à 13, comprenant une pluralité de rails latéraux (44, 46, 48, 50) accouplés à la structure de support (32) et une pluralité de roulettes pivotantes (58) accouplées à la base (34).
